(19) Europäisches Patentamt
European Patent Office
Office européen des brevets

(11) **EP 3 359 326 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **16774968.8**

(22) Anmeldetag: **04.10.2016**

(51) Int Cl.:
*B23K 35/28* (2006.01)   *B23K 35/02* (2006.01)
*B32B 15/01* (2006.01)   *C22C 21/02* (2006.01)
*C22C 21/04* (2006.01)   *C22C 21/00* (2006.01)
*C22C 21/08* (2006.01)

(86) Internationale Anmeldenummer:
**PCT/EP2016/073665**

(87) Internationale Veröffentlichungsnummer:
**WO 2017/060234 (13.04.2017 Gazette 2017/15)**

(54) **ALUMINIUMVERBUNDWERKSTOFF ZUR VERWENDUNG IN THERMISCHEN FLUSSMITTELFREIEN FÜGEVERFAHREN UND VERFAHREN ZU DESSEN HERSTELLUNG**

ALUMINIUM COMPOUNDS MATERIAL FOR USE IN THERMAL FLUXLESS JOINING METHOD AND METHOD FOR PRODUCING THE SAME

MATIERE COMPOSITE D'ALUMINIUM UTILISEE DANS LE PROCEDE D'ASSEMBLAGE THERMIQUE SANS FLUX ET SON PROCEDE DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2015 EP 15188422**

(43) Veröffentlichungstag der Anmeldung:
**15.08.2018 Patentblatt 2018/33**

(73) Patentinhaber: **Hydro Aluminium Rolled Products GmbH**
**41515 Grevenbroich (DE)**

(72) Erfinder:
• **ECKHARD, Kathrin**
 **53347 Alfter (DE)**
• **GÜßGEN, Olaf**
 **50931 Köln (DE)**
• **RICHTER, Thorsten**
 **53567 Buchholz (DE)**
• **JANSSEN, Hartmut**
 **40724 Hilden (DE)**
• **EIGEN, Nico**
 **22043 Hamburg (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A1- 2 479 296   EP-A1- 2 660 043
EP-A1- 2 883 650   WO-A1-2010/000666
WO-A2-2011/034496   US-A- 3 811 177
US-A- 5 971 258

**Beschreibung**

Die Erfindung betrifft einen Aluminiumverbundwerkstoff zur Verwendung in thermischen flussmittelfreien Fügeverfahren, umfassend mindestens eine Kernschicht bestehend aus einer Aluminiumkernlegierung und mindestens einer einseitig oder beidseitig auf der Kernschicht vorgesehenen, äußeren Lotschicht bestehend aus einer Aluminiumlotlegierung. Die Erfindung betrifft weiter ein Verfahren zur Herstellung eines Aluminiumverbundwerkstoffs, insbesondere eines erfindungsgemäßen Aluminiumverbundwerkstoffs, bei dem mindestens eine Kernschicht bestehend aus einer Aluminiumkernlegierung bereitgestellt wird und mindestens eine äußere Lotschicht bestehend aus einer Aluminiumlotlegierung einseitig oder beidseitig auf die Kernschicht aufgebracht wird. Die Erfindung betrifft ferner ein Verfahren zum thermischen Fügen von Bauteilen sowie eine thermisch gefügte Konstruktion.

Aluminiumverbundwerkstoffe mit mindestens einer Kernschicht bestehend aus einer Aluminiumkernlegierung und mindestens einer einseitig oder beidseitig auf der Kernschicht vorgesehenen, äußeren Lotschicht werden zur Herstellung von gelöteten Konstruktionen verwendet. Häufig weisen die gelöteten Konstruktionen eine Vielzahl von Lötstellen auf, wie dies beispielsweise bei Wärmetauschern der Fall ist. Dabei werden zum Löten von Metallbauteilen verschiedene Lötverfahren eingesetzt.

Eines der häufigsten Verfahren ist das sogenannte "Controlled Atmosphere Brazing"-(CAB)-Lötverfahren, bei welchem die Aluminiumbauteile in der Regel unter Verwendung von Flussmitteln gelötet werden und während des Lötvorganges einer Intergasatmosphäre, beispielsweise einer Stickstoffatmosphäre ausgesetzt sind. Andere thermische Fügeverfahren verwenden ebenfalls Flussmittel und erweichen das Aluminiumlot ebenfalls bei Anwesenheit eines Schutzgases. Der Einsatz von korrosiven oder nicht korrosiven Flussmitteln birgt allerdings Nachteile beispielsweise erhöhte Anlagenkosten und technische Probleme bei der Wechselwirkung von Resten des Flussmittels mit beispielsweise Kühlmittelzusätzen in einem Wärmetauscher. Darüber hinaus ist die Verwendung von Flussmittel auch in Bezug auf die Vermeidung von Umweltbelastungen und aus Arbeitssicherheitsgesichtspunkten problematisch. Schließlich ist bei dem CAB-Lötverfahren der Einsatz von Mg-haltigen Lotlegierungen problematisch, da Magnesium die Löteigenschaften unter Schutzgasatmosphäre negativ beeinflusst. Magnesium wechselwirkt stark mit dem Flussmittel, weshalb dieses dann seine eigentliche Aufgabe nicht mehr wahrnehmen kann und es bei größeren Mengen an Mg schließlich zu keiner Verlötung mehr kommt. Die Reaktionsprodukte verkrusten zudem die Lötmuffeln, die dann öfter ausgetauscht werden müssten. Ferner kann es auch zu Poren in der Lötkehle oder zu Verfärbungen der gelöteten Bauteile kommen.

Das zweite Verfahren, welches häufig angewendet wird, ist das Vakuumlöten, bei welchem die zu lötenden Bauteile in einer Atmosphäre mit sehr niedrigem Druck, beispielsweise etwa $10^{-5}$ mbar oder weniger gelötet werden. Das Vakuumlöten kann ohne Flussmittel erfolgen. Aus diesem Grund kann bei vakuumgelöteten Bauteilen davon ausgegangen werden, dass sie eine sehr hohe Sauberkeit der Oberflächen nach dem Lötprozess aufweisen. Die Lötqualität von Bauteilen aus diesem Verfahren ist üblicherweise sehr hoch.

Allerdings sind Vakuumlötanlagen sowohl bei der Investition als auch im Betrieb sehr kostenintensiv. Ferner ist der Durchsatz im Vergleich zum Schutzgaslöten signifikant geringer.

Beim Vakuumlöten kann jedoch die Lötqualität dadurch gemindert sein, dass Restgase und Verunreinigungen in der Atmosphäre des Lötofens mit der Lotschicht reagieren. Ebenso weist die Lotschicht eine Oxidschicht an der Oberfläche auf, welche die Benetzungseigenschaften des Lots mindern kann. Zur Verbesserung der Lötqualität wird dem Aluminiumlot daher in der Regel ein bestimmter Anteil von Magnesium zugefügt, um ein besseres Lötergebnis zu erhalten. Das Magnesium in der Lotschicht beginnt bereits unterhalb der Schmelztemperatur des Lotes zu verdampfen, womit die vorhandene Oxidschicht in einer dem Löten zuträglichen Weise gestört wird. Beim Schmelzen der Lotschicht kann das verdampfende Mg damit den negativen Effekt der Oxidschicht an der Oberfläche der Schmelze vermindern. Darüber hinaus fungiert das verdampfte Magnesium als Getter-Material und reagiert beispielsweise mit Sauerstoff und Wasser in der Atmosphäre des Ofens. Solche Restgase können damit von der Lotschicht ferngehalten werden.

In dem Lehrbuch Schweißen und Hartlöten von Aluminiumwerkstoffen von H. Schoer, DVS Media Verlag (2003) wird beschrieben, dass Mg-Gehalte beim Vakuumlöten anfänglich 2 bis 3 % betrugen. Durch spätere Entwicklungen im Vakuumlöten konnte der Mg-Gehalt der Lotlegierungen auf bis zu 1,2 % abgesenkt werden. Unterhalb dieser Mg-Gehalte sei Vakuumlöten nur möglich, wenn die anderen Legierungen im Werkstoff einen entsprechend merklich höheren Mg-Gehalt aufweisen.

Daher werden in der Regel Lotlegierungen mit relativ hohem Mg-Gehalt im Vakuumlöten verwendet. Üblicherweise sind diese Lotlegierungen mit einem Mg-Gehalt von mindestens 1,0 Gew.-% Mg vom Typ AA 4004 oder AA 4104.

Nachteilig an diesen üblicherweise eingesetzten hohen Mg-Gehalten ist jedoch, dass das Kondensat des verdampften Mg sich als Rückstand in den Öfen absetzt. Dadurch müssen die Öfen in kürzeren Intervallen aufwändig von den entstehenden Rückständen gereinigt werden. Dies verursacht zusätzliche Kosten und mindert die Produktivität der Ofenanlagen.

Damit ergibt sich mit dem Vakuumlöten zwar eine flussmittelfreie Alternative zum CAB-Lötverfahren, jedoch ist das Vakuumlöten apparativ sehr aufwändig und damit sehr kostenintensiv. Auch war bisher die Materialauswahl aufgrund der Erfordernisse eines höheren Mg-Gehalts eingeschränkt. Üblicherweise ist damit auch aufgrund der Zusammensetzung der Werkstoffe bereits eine Verwendung in einem bestimmten thermischen Fügeverfahren vorgegeben. Lotlegierungen mit niedrigen Mg-Gehalten werden insbesondere im CAB-Verfahren unter der Verwendung von Flussmitteln eingesetzt, eigneten sich bisher aber kaum für ein zuverlässiges und wirtschaftliches Fügen im Vakuumlötverfahren. Lotlegierungen mit höheren Mg-Gehalten, etwa ab 1,0 Gew.-% Mg, können im Vakuum mit guten Lötergebnissen verwendet werden, sind allerdings völlig ungeeignet für das CAB-Verfahren. Der Anwender eines Werkstoffes ist damit oft mit der Zusammensetzung einer Lotschicht in einem Werkstoff oder einem Bauteil bereits auf ein bestimmtes Fügeverfahren festgelegt.

Aus den japanischen Veröffentlichungen JP 04-1000696, JP 04-100674 sowie der JP 05-154693 ist die Verwendung eines alkalisch gebeizten Aluminiumverbundwerkstoffs in einem Vakuumlötverfahren oder mit Flussmitteln in einem CAB-Lötverfahren bekannt.

Aus der internationalen Patentanmeldung WO 2010/000666 A1 ist darüber hinaus ein Verfahren zum flussmittelfreien Löten mit dem CAB-Lötverfahren bekannt, bei welchem die Aluminiumlotschicht aus einer ersten Aluminiumlotschicht und einer zweiten Aluminiumlotschicht besteht. Die zweite Aluminium-Lotschicht besteht aus einer Al-Si Aluminiumlegierung, welche neben 5 Gew.-% - 20 Gew.-% Silizium auch 0,01 Gew.-% - 3 Gew.-% Magnesium enthält. Die erste Aluminiumlotschicht enthält dagegen 2 Gew.-% - 14 Gew.-% Silizium und weniger als 0,4 Gew.-% Magnesium. Der zweischichtige Aufbau der Aluminiumlotschicht ist allerdings insofern nachteilig, als dass bei der Herstellung der zweischichtigen Aluminiumlotschicht höhere Kosten anfallen. Darüber hinaus kann ein wesentlicher Nachteil gängiger zweischichtiger Aufbauten, beispielsweise mit einer außenliegenden Plattierung aus Reinaluminium, sein, dass ihre Verwendung nicht mit Flussmittel kompatibel ist. Nicht hinreichende Lötergebnisse, beispielsweise aufgrund temporär schlechterer Ofenatmosphäre mit zu hohem Sauerstoffpartialdruck oder zu hoher Feuchtigkeit in der Atmosphäre, können nicht optional durch den Einsatz von Flussmittel kompensiert werden.

Die US-Patentschrift US 5,102,033 beschreibt dagegen ein Verfahren, bei welchem ein Aluminiumverbundwerkstoff bestehend aus einer Aluminiumkernlegierung und einer Aluminiumlotlegierungsschicht mit einer sauren Beizlösung, welche eine Mischung aus Salpetersäure und Flusssäure enthält, gebeizt und dann durch ein Vakuumlöten gelötet wird. Zwar nennt die US-Schrift auch konventionelle Lötverfahren. Diese sind aber in der Regel, sofern diese nicht im Vakuum durchgeführt werden, durch die Verwendung von Flussmitteln gekennzeichnet.

Die eigene veröffentlichte WO 2013/164466 A1 offenbart das Prinzip der Verwendung eines sauer oder alkalisch gebeizten Aluminiumverbundwerkstoffs in einem flussmittelfreien thermischen Fügeverfahren.

EP 2 883 650 A1 offenbart die Verwendung eines Aluminiumverbundwerkstoffs in einem thermischen Fügeverfahren bestehend aus mindestens einer Aluminiumkernlegierung und mindestens einer ein- oder beidseitig auf der Aluminiumkernlegierung vorgesehenen, äußeren Lotschicht, bestehend aus einer Aluminiumlotlegierung, wobei die Aluminiumlotschicht eine gebeizte Oberfläche aufweist.

Vor diesem Hintergrund ist es die Aufgabe der vorliegenden Erfindung, einen Aluminiumverbundwerkstoff zur Verwendung in thermischen flussmittelfreien Fügeverfahren vorzuschlagen, mit welchem die Löteigenschaften ohne die Verwendung von Flussmitteln unter Vermeidung der aus dem Stand der Technik bekannten Nachteile weiter optimiert werden können und auch der gleiche Aluminiumverbundwerkstoff in den verschiedenen Lötverfahren, insbesondere sowohl im Vakuum als auch unter Schutzgas, prozesssicher gefügt werden kann.

Zudem soll hierzu auch ein Verfahren zur Herstellung eines

Aluminiumverbundwerkstoffs, ein Verfahren zum thermischen Fügen von Bauteilen sowie eine thermisch gefügte Konstruktion angegeben werden.

Gemäß einer ersten Lehre wird die genannte Aufgabe betreffend einen Aluminiumverbundwerkstoff dadurch gelöst, dass die Aluminiumlotlegierung folgende Zusammensetzung in Gew.-% aufweist:

| | | | | |
|---|---|---|---|---|
| 6,5 % | ≤ | Si | ≤ | 13%, |
| Fe | ≤ | 1%, | | |
| 90 ppm | ≤ | Mg | ≤ | 300 ppm, |
| Bi | < | 500 ppm, | | |
| Mn | ≤ | 0,15%, | | |
| Cu | ≤ | 0,3 %, | | |
| Zn | ≤ | 3 %, | | |
| Ti | ≤ | 0,30 %, | | |

Rest Al und unvermeidbare Verunreinigungen einzeln maximal 0,05 %, in Summe maximal 0,15 % und die Aluminiumlotschicht eine alkalisch gebeizte oder sauer gebeizte Oberfläche aufweist.

Durch die oben genannte Spezifikation des Si-Gehalts der Aluminiumlotlegierung kann erreicht werden, dass diese einen niedrigeren Schmelzpunkt als die Aluminiumkernlegierung aufweist, sodass beim Erhitzen des zu lötenden Bauteils auf eine Temperatur unterhalb der Solidustemperatur der Aluminiumkernlegierung die Aluminiumlotschicht flüssig bzw. teilweise flüssig wird. Die Aluminiumkernlegierung schmilzt dagegen nicht.

Die Si-Gehalte der Aluminiumlotlegierung liegen bevorzugt bei minimal 6,5 Gew.-% bis maximal 12 Gew.-%, besonders bevorzugt bei minimal 6,8 Gew.-% bis maximal 11 Gew.-%. Durch eine Begrenzung des maximalen Si-Gehalts können nachteilige Effekte beim thermischen Fügen vermieden werden, etwa Erosion durch Diffundieren von Si in das gefügte Bauteil.

Durch die spezielle und einzigartige Kombination einer alkalisch gebeizten oder sauer gebeizten Oberfläche mit dem oben genannten Bereich des Mg-Gehalts wird erreicht, dass der Aluminiumverbundwerkstoff flussmittelfrei in einem thermischen Fügeverfahren verwendet werden kann und dabei hervorragende Lötergebnisse erzielt werden können. Dies gilt sowohl in Vakuumlötverfahren als auch für ein flussmittelfreies thermisches Fügen unter Schutzgasatmosphäre, beispielsweise in einem CAB-Lötverfahren, welches üblicherweise ohne Flussmittel nicht oder nur sehr eingeschränkt durchgeführt werden kann. Mit dem Aluminiumverbundwerkstoff kann damit auf den sicherheits- und produktionstechnisch anspruchsvolleren und kostenintensiveren Einsatz von Flussmitteln auch bei hohen Anforderungen an die Qualität der Lötverbindung verzichtet werden. Überraschend wurde festgestellt, dass in Kombination mit einer alkalischen oder sauren Beize, dieser speziell eingestellte Mg-Gehalt bereits ausreichend ist, um thermisches Fügen unter Vakuum zu ermöglichen, was sonst nur von Lotlegierungen mit Mg-Gehalten von mehr als 1% bekannt war.

Durch die Begrenzung des Mg-Gehalts auf höchstens 300 ppm, vorzugsweise weniger als 230 ppm, besonders bevorzugt weniger als 220 ppm können nicht nur die bekannten Nachteile eines zu hohen Mg-Gehalts vermieden werden, etwa dass die Qualität der Lötverbindung im CAB-Verfahren verschlechtert wird oder dass Verfärbungen der Oberfläche auftreten. Zusätzlich vorteilhaft ist die geringere Verunreinigung der Vorrichtungen zum thermischen Fügen mit Mg-Verbindungen, beispielsweise ein Lötofen, insbesondere beim Löten im Vakuum.

Gleichzeitig wurde festgestellt, dass ein gewisser Mindestgehalt von 90 ppm Mg benötigt wird, um die Lötfähigkeit des Aluminiumverbundwerkstoffs ohne den Einsatz von Flussmitteln in verschiedenen Verfahren zum thermischen Fügen, insbesondere sowohl im Vakuum als auch im Löten unter Schutzgas, zu gewährleisten. Dies ist insbesondere dann von Vorteil, wenn die Aluminiumkernlegierung einen nur geringen Mg-Gehalt aufweist, beispielsweise unterhalb von 500 ppm.

Mit dem beschriebenen Aluminiumverbundwerkstoff ist es somit möglich, dass Bauteile, die aufgrund hoher Ansprüche an die Sauberkeit der Oberfläche und an die Stabilität der Lötverbindung bisher ausschließlich im Vakuum gelötet werden konnten, nun auch im flussmittelfreien, kostengünstigeren CAB-Verfahren gefügt werden können. Insbesondere kann der Verwender des Aluminiumverbundwerkstoffs auch nach Bedarf oder anhand der verfügbaren Produktionskapazitäten auswählen, welches Verfahren zum thermischen Fügen genutzt wird, ohne die Spezifikation oder die Oberfläche des Aluminiumverbundwerkstoffs ändern zu müssen.

Bi kann die Oberflächenspannung und das Fließverhalten der geschmolzenen Aluminiumlotlegierung reduzieren und dadurch die Löteigenschaften verbessern. Es hat sich herausgestellt, dass in Verbindung mit den oben genannten Spezifikationen zum Si-Gehalt und Mg-Gehalt sowie der alkalisch gebeizten oder sauer gebeizten Oberfläche ein Bi-Gehalt von bis zu 500 ppm die Löteigenschaften weiter optimiert. Bevorzugt wird Bi der Aluminiumlotlegierung gezielt im genannten Konzentrationsbereich zugesetzt.

Fe ist gewöhnlicherweise als Verunreinigung oder auch Zusatz in Aluminiumlegierungen enthalten. Der Fe-Gehalt der Aluminiumlotlegierung beträgt höchstens 1 Gew.-%, bevorzugt höchstens 0,8 Gew.-%. Auch Mn und Cu sind oft als Verunreinigung, Legierungselement oder geringer Zusatz in Aluminiumlegierungen zu finden, wobei die Aluminiumlotlegierung höchstens einen Mn-Gehalt von 0,15 Gew.-% und einen Cu-Gehalt von höchstens 0,3 Gew.-% aufweist. Ti kann als Verunreinigung oder Zusatz zum Zwecke der Kornfeinung beigefügt sein, wobei der Ti-Gehalt der Aluminiumlotlegierung höchstens 0,30 Gew.-% beträgt.

Der Zn-Gehalt der Aluminiumlotlegierung ist auf höchstens 3 Gew.-%, bevorzugt höchstens 1,2 Gew.-%, beschränkt. Zn kann als zusätzliches Legierungselement vorgesehen sein, um das elektrochemische Potential der Lotlegierung im Vergleich zu anderen Bereichen des Werkstoffs oder des herzustellenden Bauteils zu senken und den Korrosionsschutz dieser anderen Bereiche zu fördern. Zur Senkung des elektrochemischen Potentials ist vorzugsweise ein Zn-Gehalt von mindestens 0,8 Gew.-% bis maximal 1,2 Gew.-% in der Aluminiumlotlegierung vorgesehen.

Höhere Zn-Gehalte erhöhen tendenziell die Korrosionsanfälligkeit der Aluminiumlotlegierung. Ist eine Senkung des elektrochemischen Potentials der Lotlegierung nicht erforderlich oder nicht erwünscht, kann der Zn-Gehalt auf geringere Gehalte beschränkt werden. Vorzugsweise beträgt der Zn-Gehalt zur Verbesserung der Korrosionsanfälligkeit der Aluminiumlotlegierung maximal 0,2 Gew.-%, vorzugsweise maximal 0,1 Gew.-% oder als Verunreinigung maximal 0,05 Gew.-%.

Vorzugsweise weist die Aluminiumlotlegierung in einer Ausgestaltung des Aluminiumverbundwerkstoffs einen Mg-Gehalt in Gew.-% von

$$90 \text{ ppm} \quad \leq \quad Mg \quad \leq \quad 200 \text{ ppm}$$

auf. Durch den zusätzlich begrenzten Maximalgehalt von Mg können die negativen Auswirkungen des Mg-Gehalts, beispielsweise Probleme beim Einsatz im CAB-Verfahren, weiter eingedämmt werden. Es hat sich herausgestellt, dass in diesem niedrigen und speziell eingestellten Bereich des Mg-Gehalts im Zusammenhang mit der alkalisch gebeizten oder sauer gebeizten Oberfläche auch hervorragende Lötergebnisse erzielt werden können.

Gemäß einer weiteren Ausgestaltung des Aluminiumverbundwerkstoffs kann der Mg-Gehalt in der Aluminiumlotlegierung einen Gehalt in Gew.-% von

$$130 \text{ ppm} \quad \leq \quad Mg \quad \leq \quad 200 \text{ ppm}$$

aufweisen. In diesem Bereich sind die Löteigenschaften einer gebeizten Oberfläche des Aluminiumverbundwerkstoffs und die Eignung für einen wirtschaftlichen Produktionsprozess weiter optimiert und im Wesentlichen vom Mg-Gehalt der Aluminiumkernlegierung entkoppelt.

Gemäß einer weiteren Ausgestaltung des Aluminiumverbundwerkstoffs weist die Aluminiumlotlegierung einen Bi-Gehalt in Gew.-% von

$$Bi \quad \leq \quad 280 \text{ ppm}$$

auf. Entsprechende Bi-Gehalte sind bereits ausreichend, um die Löteigenschaften des Aluminiumverbundwerkstoffs weitgehend zu optimieren, ohne größere Mengen an Bi zusetzen zu müssen.

Um die Lötergebnisse weiter zu verbessern, beträgt der Bi-Gehalt der Aluminiumlotlegierung in Gew.-%

$$100 \text{ ppm} \quad \leq \quad Bi \quad \leq \quad 280 \text{ ppm, insbesondere}$$
$$200 \text{ ppm} \quad \leq \quad Bi \quad \leq \quad 280 \text{ ppm.}$$

Insbesondere durch entsprechende Zusätze von Bi wird die Lötfähigkeit weiter erhöht. Vorzugsweise werden die Mindestgehalte an Bi mit einer alkalisch gebeizten Oberfläche kombiniert. Es hat sich herausgestellt, dass der vorteilhafte Effekt von Bi in der Aluminiumlotlegierung auf besondere Weise durch eine alkalisch gebeizte Oberfläche unterstützt wird.

Weiter hat sich gezeigt, dass Zusätze von Bi auch teilweise den Effekt des Mg-Gehalts, welcher zu einer Lötfähigkeit sowohl im Vakuum als auch unter Schutzgas beiträgt, eindämmen können. Es wird vermutet, dass Zusätze von Bi eine intermetallische Phase mit Mg eingehen, beispielsweise $Mg_3Bi_2$, womit ein Teil des Mg-Gehalts gebunden wird. Daher kann es vorteilhaft sein, die Grenzwerte des Bereichs des Mg-Gehalts anzuheben, wenn über 100 ppm bzw. über 200 ppm Bi in der Aluminiumlotlegierung vorhanden sind. Insbesondere die zuvor beschriebenen Minimalwerte des Mg-Gehalts der Aluminiumlotlegierung können dabei um 50 ppm, insbesondere 70 ppm angehoben werden. Denkbar ist auch, die zuvor beschriebenen Maximalwerte des Mg-Gehalts der Aluminiumlotlegierung um 50 ppm, insbesondere 70 ppm anzuheben.

Gemäß einer alternativen Ausgestaltung des Aluminiumverbundwerkstoffs ist der Bi-Gehalt der Aluminiumlotlegierung auf höchstens 50 ppm begrenzt. Insbesondere ist Bi dann nur als Verunreinigung in der Aluminiumlotlegierung vorhanden. Aufgrund der guten Löteigenschaften, welche durch die oben genannte Kombination des Mg-Gehalts mit der Oberflächenbehandlung bereits begründet sind, kann mit dieser Begrenzung auf den Zusatz von Bi verzichtet werden.

In einer weiteren bevorzugten Ausgestaltung des Aluminiumverbundwerkstoffs erfüllt die Aluminiumlotlegierung beispielsweise die Spezifikationen des Typs AA 4045 oder des Typs AA 4343 bei erfindungsgemäßem Mg-Gehalt. Mit der Beschränkung der Legierungszusammensetzung auf die Typen AA 4343 und AA 4045 bei erfindungsgemäßem Mg-Gehalt kann die Lotschicht des Aluminiumverbundwerkstoffs innerhalb der Spezifikation einer Standardlotlegierung bereitgestellt werden, indem innerhalb dieser Legierungsspezifikation die gezielte Auswahl des Mg-Gehalts durchgeführt wird und mit der alkalisch gebeizten oder sauer gebeizten Oberfläche kombiniert wird.

Vorzugsweise weist die Legierungszusammensetzung des Typs AA 4343 die folgenden Legierungselemente in Gew.-% auf:

$$6,8 \% \quad \leq \quad Si \quad \leq \quad 8,2 \%,$$
$$90 \text{ ppm} \quad \leq \quad Mg \quad \leq \quad 300 \text{ ppm,}$$

(fortgesetzt)

| | | |
|---|---|---|
| Fe | $\leq$ | 0,8 %, |
| Cu | $\leq$ | 0,25 %, |
| Mn | $\leq$ | 0,10 %, |
| Zn | $\leq$ | 0,20 %, |

Rest Al und unvermeidbare Verunreinigungen einzeln maximal 0,05 %, in Summe maximal 0,15 %.

Vorzugsweise weist die Legierungszusammensetzung des Typs AA 4045 die folgenden Legierungselemente in Gew.-% auf:

| | | | | |
|---|---|---|---|---|
| 9,0 % | $\leq$ | Si | $\leq$ | 11,0 %, |
| 90 ppm | $\leq$ | Mg | $\leq$ | 300 ppm, |
| | | Fe | $\leq$ | 0,8 %, |
| | | Cu | $\leq$ | 0,30 %, |
| | | Mn | $\leq$ | 0,05 %, |
| | | Zn | $\leq$ | 0,10 %, |
| | | Ti | $\leq$ | 0,20 %, |

Rest Al und unvermeidbare Verunreinigungen einzeln maximal 0,05 %, in Summe maximal 0,15 %.

Optional kann auch zur Senkung des elektrochemischen Potentials abweichend von den Typen AA 4343 und AA 4045 ein zusätzlicher Zn-Gehalt bis maximal 3 Gew.-% vorgesehen sein. Bevorzugt beträgt hierfür der Zn-Gehalt 0,8 Gew.-% bis 1,2 Gew.-%.

Der Aluminiumverbundwerkstoff wird beispielsweise dadurch weiter verbessert, dass als Aluminiumkernlegierung eine Aluminiumlegierung vom Typ AA1xxx, AA2xxx, AA3xxx, AA5xxx oder AA6xxx vorgesehen ist. Der Mg-Gehalt in den angegebenen Aluminiumkernlegierungen kann jeweils maximal 1,0 Gew.-%, bevorzugt jeweils maximal 0,8 Gew.-% betragen. Aufgrund der nunmehr im thermischen Fügen unter Schutzgas verwendbaren Aluminiumkernlegierungen, insbesondere auch Mg-haltige Aluminiumkernlegierungen ist das Spektrum der Einsatzgebiete von gelöteten Konstruktionen deutlich breiter geworden. Auch können schwierig lötbare, beispielsweise Mg-haltige Aluminiumlegierungen, wie beispielsweise vom Legierungstyp AA5xxx oder AA6xxx mit einem Mg-Gehalt von maximal 1,0 Gew.-% bzw. 0,8 Gew.-% gemäß einer weiteren Ausgestaltung in einem flussmittelfreien, thermischen Fügeverfahren unter Schutzgas (CAB) gefügt werden. Es hat sich beispielsweise herausgestellt, dass erfindungsgemäße Verbundwerkstoffe mit einer Aluminiumkernlegierung vom Typ AA6063 oder vom Typ AA 6060 ebenfalls sehr gute Lötergebnisse sowohl im Vakuum- als auch im CAB-Löten erzielen.

In einer Ausgestaltung des Aluminiumverbundwerkstoffs erfüllt die Aluminiumkernlegierung die Spezifikationen des Typs AA 3xxx. Aluminiumkernlegierungen dieses Typs werden mit unterschiedlichen Mg-Gehalten verwendet. Eine bevorzugte Variante dieses Typs weist einen Mg-Gehalt von mindestens 0,2 Gew.-% bis maximal 1,0 Gew.-% oder maximal 0,8 Gew.-% oder bevorzugt 0,2 Gew.-% bis 0,6 Gew.-% auf. Sie weist aufgrund des höheren Mg-Gehalts höhere Festigkeiten auf. Ein Beispiel einer entsprechenden AA3xxx-Legierung ist die Legierung vom Typ AA3005.

Da ein Flussmittel bei dem erfindungsgemäßen Aluminiumverbundwerkstoff im CAB-Lötverfahren nicht mehr eingesetzt werden muss, lassen sich alle oben genannten, magnesiumhaltigen Legierungstypen auch ohne eine als Magnesiumdiffusionssperre wirkende Zwischenplattierung im CAB-Lötverfahren löten.

Die Aluminiumkernlegierung, insbesondere eine AA3xxx Aluminiumkernlegierung, kann zudem einen Mg-Gehalt von

$$500 \text{ ppm} \quad \leq \quad Mg \quad \leq \quad 0,30 \text{ %}$$

in Gew.-% aufweisen. AA3xxx-Kernlegierungen mit diesen Mg-Gehalten sind weit verbreitet und werden in unterschiedlichsten Anwendungen eingesetzt. Abhängig von dem gewählten Lotverfahren mussten diese bisher mit unterschiedlichen Loten, welche auf das Vakuum- oder das CAB-Lötverfahren zugeschnitten sind, hergestellt werden. Hier kann nun eine einzige Kombination aus Aluminiumlot und Aluminiumkernlegierung in vielen Anwendungen eingesetzt werden und die Produktionskosten senken. Dies kann zudem die Recyclingfähigkeit der gelöteten Bauteile erheblich verbessern.

Besonders bevorzugte Legierungen mit diesen Mg-Gehalten sind die Aluminiumlegierungen vom Typ AA 3003 oder vom Typ AA 3017. Die angegebenen Aluminiumkernlegierungen werden insbesondere für den Einsatz im Automobilbereich, beispielsweise für die Konstruktion von Wärmetauschern, verwendet.

Die Lötfähigkeit des Aluminiumverbundwerkstoffs bleibt unbeeinflusst, auch wenn der Mg-Gehalt der Aluminiumkernlegierung höchstens 0,1 Gew.-%, vorzugsweise höchstens 0,05 Gew.-% oder weniger als 0,05 Gew.-% beträgt. Aluminiumverbundwerkstoffe mit der spezifischen Kombination von Mg-Gehalt der Aluminiumlotlegierung und einer sauren oder alkalisch gebeizten Oberfläche erlauben somit auch eine prozesssichere Verarbeitung Aluminiumkernlegierungen mit sehr niedrigen Mg-Gehalten. Der Mg-Gehalt der Aluminiumkernlegierung kann sogar auf höchstens 250 ppm bzw. höchstens 100 ppm begrenzt werden. Selbst Magnesium freie Aluminiumkernlegierungen können zufriedenstellend gelötet werden.

Gemäß einer weiteren Ausgestaltung des Aluminiumverbundwerkstoffs weist die Aluminiumkernlegierung bevorzugt eine der folgenden Zusammensetzungen auf:

| | | | | |
|---|---|---|---|---|
| 0,25 % | ≤ | Cu | ≤ | 0,60 %, |
| 0,25 % | ≤ | Fe | ≤ | 0,4 %, |
| | | Mg | ≤ | 0,10 %, |
| 0,9 % | ≤ | Mn | ≤ | 1,5 %, |
| | | Si | ≤ | 0,25 %, |
| | | Ti | ≤ | 0,25 %, |
| | | Zn | ≤ | 0,10 %, |
| | | Cr | ≤ | 0,15 %, |

Rest Al und Verunreinigungen einzeln ≤ 0.05 %, in Summe ≤ 0.15 %
oder

| | | | | |
|---|---|---|---|---|
| 0,1 % | ≤ | Cu | ≤ | 0,6 %, |
| | | Fe | ≤ | 0,7 %, |
| 0,2 % | ≤ | Mg | ≤ | 0,60 %, |
| 1,0 % | ≤ | Mn | ≤ | 1,6 %, |
| | | Si | ≤ | 0.7 %, |
| | | Ti | ≤ | 0,10 %, |
| | | Zn | ≤ | 0,25 %, |
| | | Cr | ≤ | 0,1 %, |

Rest Al und Verunreinigungen einzeln ≤ 0,05 %, in Summe ≤ 0,15 %
oder

| | | | | |
|---|---|---|---|---|
| 0,2 % | ≤ | Cu | ≤ | 0,8 %, |
| | | Fe | ≤ | 0,7 %, |
| | | Mg | ≤ | 0,30 %, |
| 1,0 % | ≤ | Mn | ≤ | 1,5 %, |
| | | Si | ≤ | 0,6 %, |
| | | Zn | ≤ | 0,10 %, |

Rest Al und Verunreinigungen einzeln ≤ 0.05 %, in Summe ≤ 0.15 %

Die zuvor genannten Aluminiumlegierungen weisen aufgrund erhöhter Cu-Gehalte verbesserte Festigkeiten bei verbesserter Korrosionsbeständigkeit aufgrund eines erhöhten elektrochemischen Potentials auf. Sie werden bevorzugt ebenfalls für die Herstellung von Teilen von Wärmetauschern eingesetzt und profitieren von der flexiblen Gestaltung des verwendbaren Lotverfahrens erheblich, da wie bereits ausgeführt, ein erfindungsgemäßer Aluminiumverbundwerkstoff mit entsprechend präparierter Oberfläche sowohl im CAB-Lötverfahren ohne Flussmittel als auch im Vakuumlötverfahren einsetzbar ist.

Weitere Varianten weisen folgende Zusammensetzungen auf:

| | | | | |
|---|---|---|---|---|
| | Cu | ≤ | 0,2 %, | |
| | Fe | ≤ | 0,7 %, | |
| | | Mg | ≤ | 0,10 %, |
| 1,0 % | ≤ | Mn | ≤ | 1,7 %, |

(fortgesetzt)

| | | | |
|---|---|---|---|
| | Si | $\leq$ | 1 %, |
| 0,4 % $\leq$ | Zn | $\leq$ | 1,5 %, bevorzugt $1,1 \leq Zn \leq 1,5\%$ |

Rest Al und Verunreinigungen einzeln $\leq$ 0.05 %, in Summe $\leq$ 0.15 %

oder

| | | | |
|---|---|---|---|
| | Cu | $\leq$ | 0,10 %, |
| | Fe | $\leq$ | 0,7 %, |
| | Mg | $\leq$ | 0,4 %, |
| 1,0 % $\leq$ | Mn | $\leq$ | 1,5 %, |
| | Si | $\leq$ | 0,8 %, |
| | Zn | $\leq$ | 0,10 %, |

Rest Al und Verunreinigungen einzeln $\leq$ 0.05 %, in Summe $\leq$ 0.15 %.

Üblicherweise werden für unterschiedliche Teile, bei einem Wärmetauscher beispielsweise für Header, Lamelle und Rohr, unterschiedliche Aluminiumkernlegierungen verwendet. Aufgrund des verringerten Kupfergehaltes beider Aluminiumlegierungen können bei Verwendung der letztgenenannten Aluminiumkernlegierungen die Differenzen im elektrochemischen Potential zu den anderen Werkstoffen des gleichen Bauteils gering gehalten. Die zuletzt genannte Aluminiumlegierung wird daher bevorzugt für den sogenannten Header eines Wärmetauschers verwendet.

Aufgrund möglicher Diffusionseffekte zwischen Kernlegierung und Lotlegierung kann auch der Mg-Gehalt der Kernschicht ggf. zur Lötfähigkeit des Verbundwerkstoffs beitragen. Umgekehrt ist es möglich, dass eine Kernlegierung mit sehr geringen Mg-Gehalten eine Senke in der Mg-Konzentration darstellt und den Mg-Gehalt der Lotlegierung effektiv verringert. Die Wirkung der Konzentrationssenke ist abhängig von den Mg-Gehalten in der Kernlegierung und der Lotlegierung, als auch von den Dicken der Kernschicht und der Lotschicht.

Für ein zuverlässiges Löten des Aluminiumverbundwerkstoffs bei einem Mg-Gehalt von 90 ppm bis 130 ppm in der Lotlegierung hat es sich als vorteilhaft herausgestellt, dass der mittlere Mg-Gehalt $c_{Mg}$ des Aluminiumverbundwerkstoffs mindestens 25 ppm beträgt. Der mittlere Mg-Gehalt ist dabei wie folgt definiert:

$$c_{Mg} = (d_{Lot}\, c_{Mg,Lot} + d_{Kern}\, c_{Mg,Kern})/d_{gesamt,}$$

wobei $d_{Lot}$, $d_{Kern}$ und $d_{gesamt}$ jeweils die Dicken der Lotschicht, Kernschicht und des gesamten Verbundwerkstoffs angeben und $c_{Mg,Lot}$ und $c_{Mg,Kern}$ die Mg-Gehalte in Lot und Kern in ppm bezeichnen. Dieser mittlere Mg-Gehalt gewährleistet vor allem bei einer Gesamtdicke des Verbundwerkstoffs von mindestens 1 mm ein gutes Lötverhalten. Bei Dicken unterhalb 1mm können auch mit geringeren mittleren Mg-Gehalten zuverlässige Lötergebnisse erreicht werden.

Mg-Gehalte von 130 ppm bis 300 ppm in der Lotlegierung des erfindungsgemäßen Aluminiumverbundwerkstoffes bieten dagegen den Vorteil, dass sehr gute Lötergebnisse weitgehend unabhängig von der Kernlegierung bzw. dem mittleren Mg-Gehalt und unabhängig von der Dicke des Aluminiumverbundwerkstoffs erreicht werden können.

In einer Ausgestaltung des Aluminiumverbundwerkstoffs liegt der Aluminiumverbundwerkstoff in Bandform vor und ist insbesondere durch Walzplattieren oder simultanes Gießen hergestellt. Dadurch wird ein in wirtschaftlich großem Maßstab herstellbarer Aluminiumverbundwerkstoff bereitgestellt, insbesondere durch eine Herstellung des Aluminiumverbundwerkstoffs durch simultanes Gießen oder Walzplattieren. Alternativ zum Simultangießen oder Walzplattieren besteht auch die Möglichkeit, die Aluminiumlotschicht durch thermisches Spritzen aufzubringen. Die erstgenannten Varianten sind allerdings die derzeit in großem industriellem Umfang genutzten Verfahren zur Herstellung eines Aluminiumverbundwerkstoffs, wobei sich der gegossene Werkstoff durch seine deutlichen Konzentrationsgradienten zwischen den verschiedenen Aluminiumlegierungsschichten von den diskreten Schichtzusammensetzungen des walzplattierten Werkstoffs unterscheiden. Beim Walzplattieren finden nur geringe Diffusionsprozesse zwischen den Schichten statt.

Gemäß einer nächsten Ausgestaltung des Aluminiumverbundwerkstoffs wurde der Aluminiumverbundwerkstoff vor dem Beizen weichgeglüht, rückgeglüht oder lösungsgeglüht. Durch Weichglühen, Rückglühen oder Lösungsglühen können die mechanischen Eigenschaften des Aluminiumverbundwerkstoffs, insbesondere der Kernschicht entsprechend dem vorgesehenen Einsatzgebiet eingestellt werden.

Der Aluminiumverbundwerkstoff weist vorzugsweise gemäß einer weiteren Ausgestaltung eine mittlere Dicke von 0,05 bis 6 mm und weiter bevorzugt von 0,2 bis 3 mm oder 0,5 mm bis 1,5 mm auf. Mit diesen Dickenbereichen kann ein weites Spektrum an Anwendungen, insbesondere auch im Bereich von Wärmetauschern, abgedeckt werden.

In einer weiteren Ausgestaltung des Aluminiumverbundwerkstoffs weist die mindestens eine Lotschicht eine mittlere Dicke auf, welche von 2 % bis 20 %, insbesondere von 5% bis 10% der mittleren Dicke des Aluminiumverbundwerkstoffs beträgt. Die mindestens eine Lotschicht kann insbesondere eine mittlere Dicke von mindestens 20 μm aufweisen. Es hat sich herausgestellt, dass bei geeigneter Bauteilgeometrie eine entsprechend dicke Lotschicht besonders prozesssicher gute Lötergebnisse erzielt und in der Regel eine ausreichende Qualität der Lötverbindung bereitstellt. Die Lotschicht kann weiter eine mittlere Dicke von mindestens 30 μm, insbesondere von mindestens 100 μm aufweisen. Diese Dicken ermöglichen aufgrund der damit verbundenen absoluten Lotmenge verbesserte Löteigenschaften der Aluminiumlotlegierung. Insbesondere sind die entsprechenden Dicken im Hinblick auf die Mg-Gehalte der Aluminiumlotlegierung optimiert.

Gemäß einer weiteren Lehre wird die oben genannte Aufgabe betreffend ein Verfahren zur Herstellung eines Aluminiumverbundwerkstoffs, insbesondere eines zuvor beschriebenen Aluminiumverbundwerkstoffs dadurch gelöst, dass die Aluminiumlotlegierung folgende Zusammensetzung in Gew.-% aufweist:

| | | | | |
|---|---|---|---|---|
| 6,5 % | ≤ | Si | ≤ | 13 %, |
| | | Fe | ≤ | 1 %, |
| 90 ppm | ≤ | Mg | ≤ | 300 ppm, |
| | | Bi | < | 500 ppm, |
| | | Mn | ≤ | 0,15 %, |
| | | Cu | ≤ | 0,3 %, |
| | | Zn | ≤ | 3 %, |
| | | Ti | ≤ | 0,30 %, |

Rest Al und unvermeidbare Verunreinigungen einzeln maximal 0,05 %, in Summe maximal 0,15 % und der Aluminiumverbundwerkstoff mit einer wässrigen, alkalischen oder sauren Beizlösung gebeizt wird.

Wie zum zuvor beschriebenen Aluminiumverbundwerkstoff bereits ausgeführt, wird durch die spezifische und einzigartige Kombination einer alkalisch gebeizten oder sauer gebeizten Oberfläche mit dem oben genannten engen Bereich des Mg-Gehalts erreicht, dass der Aluminiumverbundwerkstoff flussmittelfrei in einem thermischen Fügeverfahren verwendet werden kann und dabei hervorragende Lötergebnisse erzielt werden können. Dies gilt auch für ein flussmittelfreies thermischen Fügen innerhalb einer Schutzatmosphäre, beispielsweise in einem CAB-Lötverfahren, welches üblicherweise ohne Flussmittel nicht oder nur sehr eingeschränkt durchgeführt werden kann. Mit dem hergestellten Aluminiumverbundwerkstoff kann damit auf den sicherheits- und produktionstechnisch anspruchsvolleren und kostenintensiveren Einsatz von Flussmitteln auch bei hohen Anforderungen an die Qualität der Lötverbindung verzichtet werden.

Durch die Begrenzung des Mg-Gehalts auf höchstens 300 ppm können nicht nur die bekannten Nachteile eines zu hohen Mg-Gehalts vermieden werden, etwa dass die Qualität der Lötverbindung im CAB-Verfahren verschlechtert wird oder dass Verfärbungen der Lötstelle auftreten. Im Zusammenhang mit der alkalisch gebeizten oder sauer gebeizten Oberfläche hat sich zudem herausgestellt, dass eine Begrenzung des maximalen Mg-Gehalts das Lötergebnis unter Abwesenheit von Flussmitteln sogar weiter optimiert. Weiter vorteilhaft ist die geringere Verunreinigung der Vorrichtungen zum thermischen Fügen mit Mg-Verbindungen, insbesondere beim Löten im Vakuum.

Gleichzeitig wurde festgestellt, dass ein gewisser Mindestgehalt von 90 ppm Mg benötigt wird, um eine gute Lötfähigkeit des Aluminiumverbundwerkstoffs ohne den Einsatz von Flussmitteln zu gewährleisten.

Gemäß einer nächsten Ausgestaltung des Aluminiumverbundwerkstoffs ist die gebeizte Oberfläche der Aluminiumlotschicht durch Beizen mit einer sauren, wässrigen Beizlösung enthaltend mindestens eine Mineralsäure und mindestens einen Komplexbildner oder mindestens eine Säure der Gruppe kurzkettiger Carbonsäuren und mindestens einen Komplexbildner

oder eine komplexierende Säure gebeizt worden.

Bevorzugt werden gemäß einer weiteren Ausführungsform beispielsweise als Mineralsäuren $H_2SO_4$ mit 0,1% bis 20 Gew.-%, $H_3PO_4$ mit 0,1% bis 20 Gew.-%, HCl mit 0,1% bis 10 Gew.-% sowie HF mit 20ppm bis 3 % oder eine Kombination der Mineralsäuren verwendet. Als komplexierende Mineralsäuren kommen bevorzugt HF mit 20ppm bis 3 Gew.-%, 20 ppm bis 1000 ppm oder 20ppm bis 600 ppm, besonders bevorzugt 300 ppm bis 600 ppm oder 300 ppm bis 480 ppm sowie $H_3PO_4$ mit 0,1% bis 20 Gew.-% zum Einsatz. Eine besonders bevorzugte Kombination besteht aus $H_2SO_4$ mit 0,5% bis 2,5 Gew.-% und HF mit 20 ppm und 480 ppm.

Als kurzkettige Karbonsäure wird bevorzugt Ameisensäure verwendet. Als Komplexbildner werden beispielsweise Fluoride mit 20 ppm bis 3 Gew.-%, vorzugsweise 20 ppm bis 1000 ppm oder 20ppm bis 600 ppm, besonders bevorzugt 300 ppm bis 600 ppm oder 300 ppm bis 480 ppm verwendet. In den Versuchen hat sich vor allem gezeigt, dass bei dem Einsatz von Fluoriden eine Konzentration von maximal 300ppm bis 600ppm, bevorzugt 300ppm bis 480 ppm ausreicht, um in einer industriellen Umgebung eine schnelle Oberflächenbehandlung zu ermöglichen.

Als Komplexbildner können Fluoride, Citrate, Oxalate oder Phosphate verwendet werden.

Durch Beizen der Aluminiumlotschicht unter Verwendung einer Mineralsäure oder mindestens eine Säure der Gruppe kurzkettiger Karbonsäuren in Kombination mit einem Komplexbildner oder unter Verwendung komplexierender Säuren kann eine Oberflächenbeschaffenheit der Aluminiumlotschicht erzeugt werden, sodass diese in einem thermischen Fügeverfahren in weitestgehender Abwesenheit von Sauerstoff weiter optimierte, hervorragende Löteigenschaften bzw. Eigenschaften zum thermischen Fügen aufweist, ohne dass Flussmittel benötigt werden.

Gemäß einer weiteren Ausgestaltung des Verfahrens weisen die Konzentrationen der Mineralsäure in der Beizlösung vorliegende Grenzen auf:

$H_2SO_4$: 0,1% bis 20 Gew.-%,
$H_3PO_4$: 0,1% bis 20 Gew.-%,
HCl: 0,1% bis 10 Gew.-%
HF: 20 ppm bis 3 Gew.-%.

Höhere Konzentrationen sind unabhängig von ihrer technischen Realisierbarkeit aus ökonomischen oder ökologischen Gründen nicht wünschenswert. Darüber hinaus zeigte sich, dass eine Kombination der Mineralsäuren $H_2SO_4$ und HF in den oben genannten Konzentrationen besonders gute Lötergebnisse erzielt. Eine besonders bevorzugte Kombination besteht aus $H_2SO_4$ mit 0,5% bis 2,5 Gew.-% und HF bevorzugt 20 ppm bis 1000 ppm oder 20ppm bis 600 ppm, besonders bevorzugt 300 ppm bis 600 ppm oder 300 ppm bis 480 ppm.

Optional ist mindestens ein Tensid in der wässrigen Beizlösung vorgesehen, um die Oberfläche des Aluminiumverbundwerkstoffs gleichzeitig zu entfetten und die Gleichmäßigkeit und Geschwindigkeit des Beizangriffs der Beizlösung zu erhöhen.

Die genannten Konzentrationen an Mineralsäuren ermöglichen es, durch Herabsetzung des pH-Wertes die Oberfläche der Aluminiumlotlegierungsschicht anzugreifen. Die Komplexbildner sorgen dafür, dass bei den genannten Konzentrationen an Mineralsäuren herausgelöste Legierungsbestandteile sehr gut wasserlöslich sind und insofern vom Reaktionsort entfernt werden können. Durch die optional vorhandenen Tenside werden mögliche organische Beläge von der Oberfläche entfernt und eine Entfettung der Aluminiumbandoberfläche erreicht. Dies hat zur Folge, dass der Beizangriff nicht lokal durch organische Oberflächenbeläge inhibiert werden kann und somit mit sehr hoher Gleichmäßigkeit stattfindet.

Gemäß einer weiteren Ausgestaltung des Verfahrens enthält die Beizlösung zusätzlich $HNO_3$. Die Effektivität von HF durch die Kombination mit Salpetersäure $HNO_3$ und weiteren Mineralsäuren lässt sich weiter erhöhen, sodass ein verbessertes Lötergebnis bei geringerem HF-Einsatz erzielt wird. Die Konzentration von $HNO_3$ beträgt vorzugsweise 0,1 Gew.-% bis 20 Gew.-%.

In einer Ausgestaltung des Aluminiumverbundwerkstoffs ist die gebeizte Oberfläche der Aluminiumlotschicht durch Beizen mit einer alkalischen Beizlösung enthaltend 0,01 - 5 Gew.-% NaOH, bevorzugt 0,2 bis 5 Gew.-% NaOH gebeizt worden. Es hat sich gezeigt, dass mit den genannten Konzentrationen ein ausreichendes Beizen der Oberfläche der Lotschicht durchgeführt werden kann, so dass auf einfache Weise ein Aluminiumverbundwerkstoff zum flussmittelfreien Löten bereitgestellt werden kann. Bevorzugt wird ein Komplexbildner der alkalischen Beize zugesetzt. Hierdurch wird das Lötergebnis weiter verbessert. Wird ein Komplexbildner enthaltendes Entfettungsmedium der alkalischen Beize zugefügt, kann gleichzeitig eine Entfettung stattfinden. Beispielsweise wird eine Beizlösung umfassend die folgenden Bestandteile verwendet: mindestens 0,5 - 3 Gew.-% eines wässrigen Gemisches aus 5 - 40 Gew.-% Natriumtripolyphosphat, 3 -10 Gew.-% Natriumgluconat, 3 - 8 Gew.-% nichtionischer und anionischer Tenside, optional 0,5 - 70 Gew.-% Natriumcarbonat, unter Zusatz von NaOH, wobei die Konzentration von NaOH in der Beizlösung insgesamt 0,01 - 5 Gew.-% beträgt. Weiter bevorzugt beträgt die Konzentration von NaOH in der Beizlösung insgesamt 0,2 - 5 Gew.-%. Mit einer solchen Beizlösung lässt sich die Oberfläche des Aluminiumverbundwerkstoffs besonders prozesssicher konditionieren.

Bevorzugt wird der Aluminiumverbundwerkstoff gemäß einer Ausgestaltung vor dem Beizen oder während des Beizens mit einem Entfettungsmedium entfettet. Die Entfettung vor dem Beizen kann auch durch eine Glühung erfolgen, während die Entfettung während des Beizens bevorzugt mit einem Entfettungsmedium erfolgt.

In einer weiteren Ausgestaltung des Verfahrens wird der zuvor mittels einer Beize behandelte Aluminiumverbundwerkstoff einer Dekapierung unterzogen. Hierfür wird vorzugsweise eine saure Lösung verwendet. Geeignet ist beispielsweise eine 1 - 10%ige Salpetersäure. Eine Dekapierung hat sich insbesondere im Zusammenhang mit einer alkalischen Beize als vorteilhaft herausgestellt.

Die Dekapierung kann optional auch unter Zusatz von Fluoriden durchgeführt werden mit einem Maximalgehalt von 1000 ppm Fluorid, vorzugsweise 200 - 600 ppm Fluorid in der Dekapierung. Mit den entsprechenden Gehalten kann eine Verbesserung der Lötfähigkeit bewirkt werden. Die Dekapierung mit Fluoriden ist insbesondere vorteilhaft bei geringeren Mg-Gehalten um die Lötfähigkeit weiter zu fördern.

Beträgt die Verweildauer bzw. Kontaktzeit des Aluminiumverbundwerkstoffs mit der Beizlösung 1 bis 60 Sekunden, bevorzugt 2 bis 40 Sekunden, kann ein wirtschaftlich durchführbarer Oberflächenbehandlungsschritt bereitgestellt werden, bei welchem beispielsweise ein ganzes Aluminiumband oberflächenbehandelt wird.

Für ein alkalisches Beizen beträgt die Kontaktzeit weiter bevorzugt 2 bis 30 Sekunden. Für ein saures Beizen beträgt die Kontaktzeit weiter bevorzugt 2 bis 20 Sekunden. Diese Kontaktzeiten ergeben eine gute Oberflächenkonditionierung und sind für eine wirtschaftliche Produktion geeignet.

In einer weiteren Ausgestaltung des Verfahrens wird die Beizbehandlung in einem Sprühprozess durchgeführt. Mit dem erfindungsgemäßen Verfahren bzw. der spezifischen Beizbehandlung ist die Konditionierung mit einem Sprühprozess zur Erhöhung der Produktionsgeschwindigkeit, beispielsweise bei der Behandlung direkt an einem laufenden Band, möglich. Ebenso denkbar ist die Verwendung eines Tauchprozesses.

Die Verweildauer bzw. Kontaktzeit kann weiter verkürzt werden, wenn die Temperatur der Beizlösung 40° Celsius bis 85° Celsius beträgt, da hierdurch die Reaktivität der Reagenzien weiter erhöht wird. Temperaturen oberhalb von 85°C erfordern zusätzliche Maßnahmen bei keinem deutlichen Gewinn an Verarbeitungsgeschwindigkeit. Ein bevorzugter Temperaturbereich liegt daher bei 50°C bis 60 °C.

Gemäß einer weiteren Lehre wird die oben genannte Aufgabe betreffend ein Verfahren zum thermischen Fügen von Bauteilen aus zumindest einer Aluminiumlegierung bei dem mindestens ein Bauteil aufweisend einen oben beschriebenen Aluminiumverbundwerkstoff mit mindestens einem weiteren Bauteil flussmittelfrei thermisch gefügt wird. Insbesondere weist das mindestens eine weitere Bauteil Aluminium oder eine Aluminiumlegierung auf.

Durch die Kombination einer alkalisch gebeizten oder sauer gebeizten Oberfläche mit dem engen Bereich des Mg-Gehalts in der Lotschicht des Aluminiumverbundwerkstoffs wird erreicht, dass thermische Fügeverfahren flussmittelfrei durchgeführt werden können und dabei hervorragende Lötergebnisse erzielt werden können. Mit dem Aluminiumverbundwerkstoff kann damit auf den sicherheits- und produktionstechnisch anspruchsvolleren und kostenintensiveren Einsatz von Flussmitteln auch bei hohen Anforderungen an die Qualität der Lötverbindung verzichtet werden.

Dabei können erfindungsgemäße Lotlegierungen vom Typen AA 4343 und AA 4045 mit spezifizierten Mg-Gehalten, verwendet werden, welche üblicherweise aufgrund des um mehrere Größenordnungen zu geringen Mg-Gehalts zumindest nicht für den Vakuumprozess geeignet sind. Durch die Kombination einer alkalisch gebeizten oder sauer gebeizten Oberfläche mit der Zusammensetzung des Aluminiumverbundwerkstoffs, insbesondere in Kombination mit abgestimmten Mg-Gehalt der Aluminiumlotlegierung, wird unter anderem erreicht, dass thermische Fügeverfahren im Vakuum auch mit derartigen Lotlegierungen mit niedrigen Mg-Gehalten durchgeführt werden können.

In einer Ausgestaltung des Verfahrens wird das flussmittelfreie thermische Fügen im Vakuum, insbesondere mit einem maximalen Druck von $10^{-5}$ mbar durchgeführt. Das Vakuumlöten kann dabei ohne Flussmittel erfolgen und zusätzlich durch die Zusammensetzung der Lotschicht die negativen Auswirkungen eines hohen Mg-Gehalts vermieden werden. Insbesondere werden die Ablagerungen von Mg-Verbindungen in einem Ofen zum thermischen Fügen weitgehend vermieden, was häufige Ofenreinigungsroutinen nicht mehr notwendig macht.

Gemäß einer nächsten Ausgestaltung wird das flussmittelfreie thermische Fügen in einer Schutzgasatmosphäre durchgeführt. Beispielsweise kann das thermische Fügen mittels eines CAB-Verfahrens durchgeführt werden. Die Verwendung einer Schutzgasatmosphäre ist im Vergleich zum Vakuumlöten apparativ weniger aufwändig.

Gemäß einer weiteren Lehre wird die oben genannte Aufgabe betreffend eine thermisch gefügte Konstruktion gelöst, mit mindestens einem Bauteil aufweisend einen oben beschriebenen Aluminiumverbundwerkstoff und mindestens einem weiteren Bauteil, welches insbesondere Aluminium oder eine Aluminiumlegierung aufweist. Die thermisch gefügte Konstruktion ist insbesondere mit einem zuvor beschriebenen Verfahren zum thermischen Fügen erhältlich. Eine solche thermisch gefügte Konstruktion kann eine hervorragende Lötqualität aufweisen, wobei durch den Verzicht auf Flussmittel beim thermischen Fügen keine Flussmittelreste an der Oberfläche verbleiben. Sie kann vor allem durch Vakuum- oder ein CAB-Lötverfahren bereitgestellt werden, ohne eine Anpassung an den Werkstoff zu erfordern. Ebenso werden die Nachteile eines hohen Mg-Gehalts, beispielsweise eine Verfärbung der Oberfläche, vermieden.

Bezüglich weiterer Ausgestaltungen und Vorteile des Verfahrens zur Herstellung eines Aluminiumverbundwerkstoffs, des Verfahrens zum thermischen Fügen und der thermisch gefügten Konstruktion wird auf die obigen Ausführungen zum Aluminiumverbundwerkstoff und die nachfolgende Beschreibung der Zeichnung verwiesen. In der Zeichnung zeigt

Fig. 1    eine perspektivische Darstellung der Lötversuchsgeometrie zur Bestimmung der Lötfähigkeiten der Aluminiumverbundwerkstoffe,

Fig. 2    eine Seitenansicht der Lötversuchsgeometrie,

Fig. 3a-c    Übersichtsdiagramme der Lötergebnisse verschiedener Ausführungsbeispiele des Aluminiumverbundwerkstoffs mit gebeizter Oberfläche in Abhängigkeit der Mg-Gehalte von Aluminiumlotlegierung und Aluminiumkernlegierung im CAB-Verfahren,

Fig. 4a-c    Fotos eines gelöteten Ausführungsbeispiels des Aluminiumverbundwerkstoffs im CAB-Verfahren,

Fig.5a-c    Fotos von Schliffen durch Lötstellen unter Verwendung des Aluminiumverbundwerkstoffs und Vergleichswerkstoffen im Vakuumlötverfahren,

Fig. 6    eine schematische Schnittansicht eines Ausführungsbeispiels eines Verfahrens zur Herstellung eines bandförmigen Aluminiumverbundwerkstoffs und

Fig. 7    in einer Schnittansicht ein Ausführungsbeispiel einer thermisch gelöteten Konstruktion in Form eines Wärmetauschers.

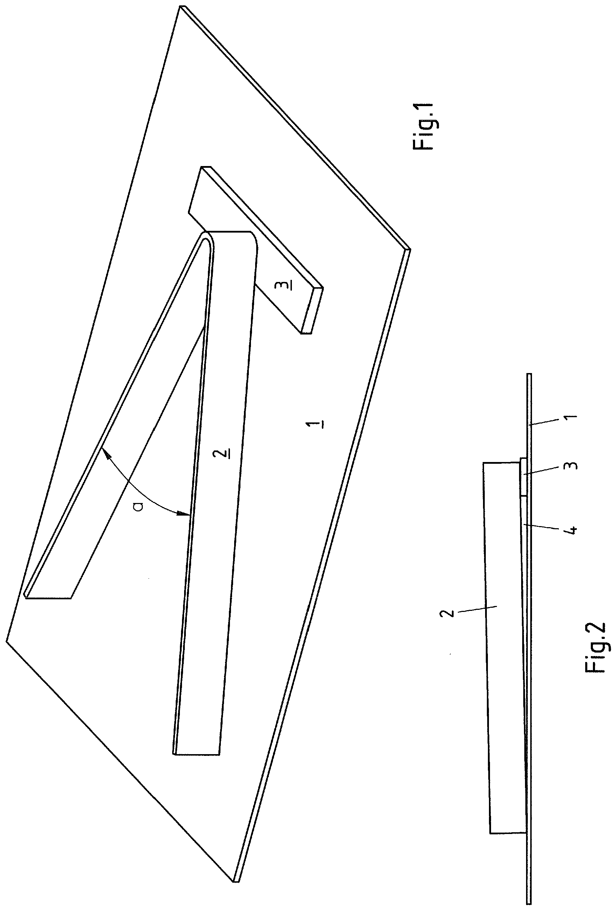

Um die Vorteile des erfindungsgemäßen Aluminiumverbundwerkstoffs zu untersuchen, wurden mit einer spezifischen Lötversuchsanordnung, wie sie in Fig. 1 perspektivisch dargestellt ist, eine Vielzahl von Versuchen durchgeführt. Grundsätzlich besteht die Lötversuchsanordnung aus insgesamt drei Teilen, einem Blech 1, einem Winkelblech 2 und einem Auflageblech 3 für das Winkelblech 2. Mit seinem geschlossenen Ende 2a liegt das Winkelblech 2 auf dem auf Blech 1 angeordneten Auflageblech 3 auf. Beide Schenkelenden 2b dagegen liegen auf dem Blech 1 auf, so dass, wie in der Seitenansicht in Fig. 2 dargestellt, ein sich verändernder Spalt von dem Auflagepunkt der Schenkelenden 2b des Winkelblechs 2 bis zum Auflagepunkt des geschlossenen Endes 2a auf dem Auflageblech 3 sich ergibt. Der Lötspalt 4 wird von den Winkelenden 2b bis zum geschlossenen Ende 2a des Winkelblechs immer größer. Durch den größer werdenden Lötspalt 4 besteht die Möglichkeit, zu beurteilen, inwiefern die Löteigenschaften des Aluminiumverbundwerkstoffs des Blechs 1 sich bei unterschiedlicher Oberflächenbehandlung verändern.

Insbesondere wurde in den Lötergebnissen die Benetzung des bereitgestellten Lötspaltes bewertet. Dabei wurden die Bewertungen

⊗ sehr gut
○ gut
€ ausreichend
∇ schlecht

abgegeben, wobei hierfür ausschlaggebend das Spaltfüllungsvermögen zusammen mit der Ausprägung der Lötkehle waren. Mit sehr gut (⊗) wurden die Versuche gewertet, die eine nahezu vollständiges Zulaufen des Lötspaltes und eine breite, glatte und porenfreie Lötkehle zeigten. Mit schlecht (V) wurden die Versuche gewertet, welche zu keiner Lötung der Bauteile führten.

Das Blech 1 besteht im vorliegenden Ausführungsbeispiel aus dem jeweiligen getesteten Aluminiumlegierungsverbundwerkstoff, welcher eine walzplattierte Aluminiumlotlegierungsschicht aufweist. Die Länge der Schenkel des Winkels 2 betrugen jeweils 50 mm, wobei der Öffnungswinkel des Winkelblechs 35° ist. Das Auflageblech 3 hat eine Dicke von 1 mm, sodass der Höhenunterschied vom geschlossenen Ende des Winkelblechs bis zum Schenkelende 1 mm beträgt. Das Winkelblech 2 sowie das Auflageblech 3 sind nicht mit einer Aluminiumlotschicht ausgestattet.

Generell ist die Lötbarkeit neben der Verwendung geeigneter lötbarer Werkstoffe auch immer eine Funktion des Bauteildesign, beispielsweise Geometrie, Spaltmaße, etc. und zusätzlich der Ofenatmosphäre. Hier spielen der Sauerstoffpartialdruck und die Feuchtigkeit der Atmosphäre eine Rolle. Die dargestellten Lötversuche im CAB-Verfahren wurden in einem Batchofen unter Stickstoffdurchfluss durchgeführt. Diese Lötergebnisse sind denen aus industriellen Produktionen bei Anwendung eines Durchlaufofens vergleichbar.

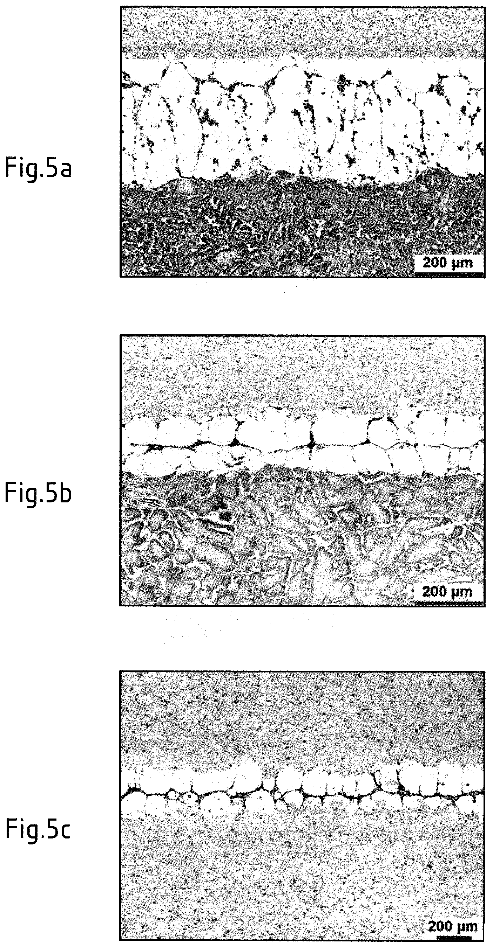

Im Folgenden werden die Versuchsergebnisse aus dem CAB-Verfahren anhand der Zusammenstellung zweier Versuchsreihen beschrieben. Dabei ist eine Versuchsreihe mit verschiedenen Mg-Gehalten von Aluminiumlotlegierung und Aluminiumkernlegierung mit verschiedenen Oberflächenbehandlungen in Tabelle 1 festgehalten. In der zweiten Versuchsreihe sind zudem Lötergebnisse für verschiedene Legierungskombinationen, wobei die Aluminiumlotlegierungen insbesondere Bi aufweisen, untersucht worden. Die Legierungskombinationen und Ergebnisse für die zweite Versuchsreihe sind in Tabelle 2 und 3 wiedergegeben. Anschließend werden in der Beschreibung zu Fig. 5a-c Ergebnisse aus dem Vakuumlötverfahren vorgestellt.

*Tabelle 1*

| Probe | | Mg-Gehalt Lotschicht (ppm) | Mg-Gehalt Kernschicht (ppm) | Lötergebnis sauer gebeizt | Lötergebnis alkalisch gebeizt, dekapiert | Lötergebnis alkalisch gebeizt, fluoridhaltige Dekapierung | mittlerer Mg-Gehalt (ppm) |
|---|---|---|---|---|---|---|---|
| A | Erf. | 282 | 409 | ⊗ | ○ | ⊗ | 383,6 |
| B | Vergl. | 79 | 192 | ∇ | € | € | 169,4 |
| C | Vergl. | 78 | 3 | ∇ | ∇ | € | 18 |
| D | Vergl. | 33 | 3 | ∇ | ∇ | ∇ | 9 |
| E | Vergl. | 46 | 1 | ∇ | € | € | 10 |
| F | Erf. | 279 | 34 | ○ | ∇ | ○ | 83 |
| G | Erf. | 181 | 12 | ○ | € | ⊗ | 45,8 |
| H | Erf. | 106 | 394 | ○ | € | ⊗ | 336,4 |
| I | Vergl. | 33 | 9 | ∇ | ○ | ∇ | 13,8 |
| J | Vergl. | 62 | 9 | ∇ | € | ∇ | 19,6 |
| K | Vergl. | 53 | 11 | ∇ | € | ∇ | 19,4 |
| L | Vergl. | 46 | 4 | ∇ | ∇ | ∇ | 12,4 |
| M | Erf. | 181 | 9 | ○ | € | ⊗ | 43,4 |
| N | Erf. | 140 | 0 | ⊗ | ○ | ○ | 28 |
| O | Vergl. | 84 | 3 | ∇ | € | ○ | 19,2 |

Tabelle 1 zeigt eine Zusammenstellung der Lötergebnisse der ersten Versuchsreihe, welche mit dem beschriebenen Versuchsaufbau gemessen wurde. Die verwendeten Aluminiumlotlegierungen erfüllen dabei die Spezifikationen des Typs AA 4045 im Zusammenhang mit den in der Tabelle 1 angegebenen Mg-Gehalten in ppm bezogen auf das Gewicht. Um einen zusätzlichen Einfluss des Mg-Gehalts der Kernschicht zu untersuchen, sind auch verschiedene Aluminiumkernlegierungen in 0,8mm mit 10% Lotplattierung des Typs AA 3003 verwendet worden, deren Mg-Gehalt in der Tabelle 1 festgehalten ist. Untersucht wurde die Lötfähigkeit abhängig vom Mg-Gehalt im Zusammenhang mit drei verschiedenen gebeizten Oberflächen, wie diese im Folgenden beschrieben werden.

Die sauer gebeizte Oberfläche wurde durch Beizen im Tauchverfahren erzeugt. Es wurde ein Gemisch aus Tensiden, Schwefelsäure und Flusssäure verwendet. Die Temperatur der Lösung betrug 60°C. Die Konzentration an Schwefelsäure betrugt 2,5 Gew.-%. Zusätzlich wurden 400 ppm Fluoride in der Beizlösung eingesetzt. Die Kontaktzeit betrug hierbei 60 Sekunden.

Die alkalische gebeizte Oberfläche wurde durch Beizen im Sprühverfahren erzeugt. Es wurde ein Gemisch aus einem Entfettungsmittel und Natronlauge verwendet. Die Temperatur der Lösung betrug 60°C. Als Entfettungsmittel wurde 2% eines wässrigen Gemisches aus 5-40 Gew.-% Natriumtripolyphosphat, 3-10 Gew.-% Natriumgluconat, 3-8 Gew.-% nicht-ionischer und anionischer Tenside verwendet. Die Konzentration der Natronlauge betrug insgesamt 1%. Die Kontaktzeit betrug 30 Sekunden.

Im Anschluss an die alkalische Sprühbehandlung wurde eine Dekapierung mittels einer sauren Spüle angewandt. Als Dekapierung wurde entweder eine 5 %ige Salpetersäure verwendet oder eine 5%ige Salpetersäure mit 200ppm Fluorid.

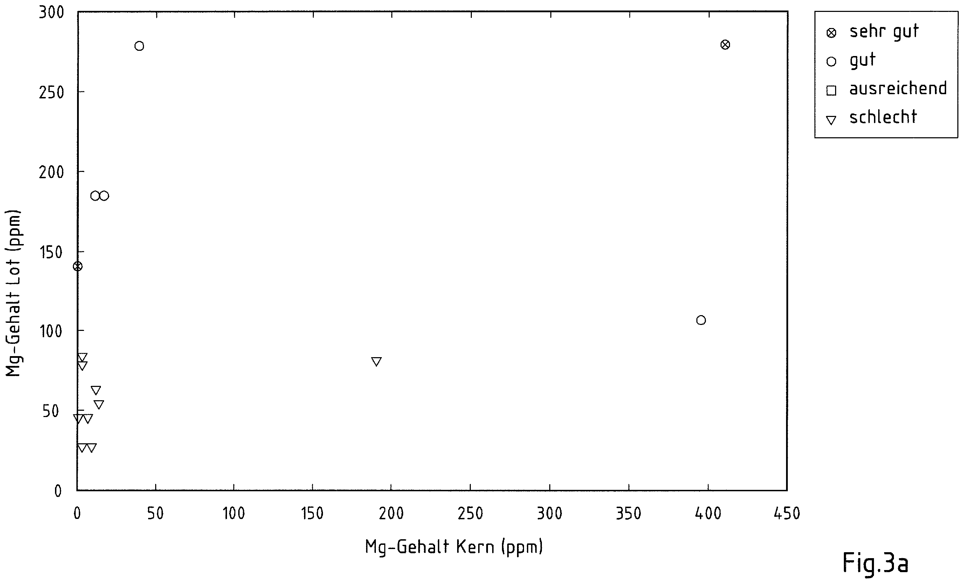

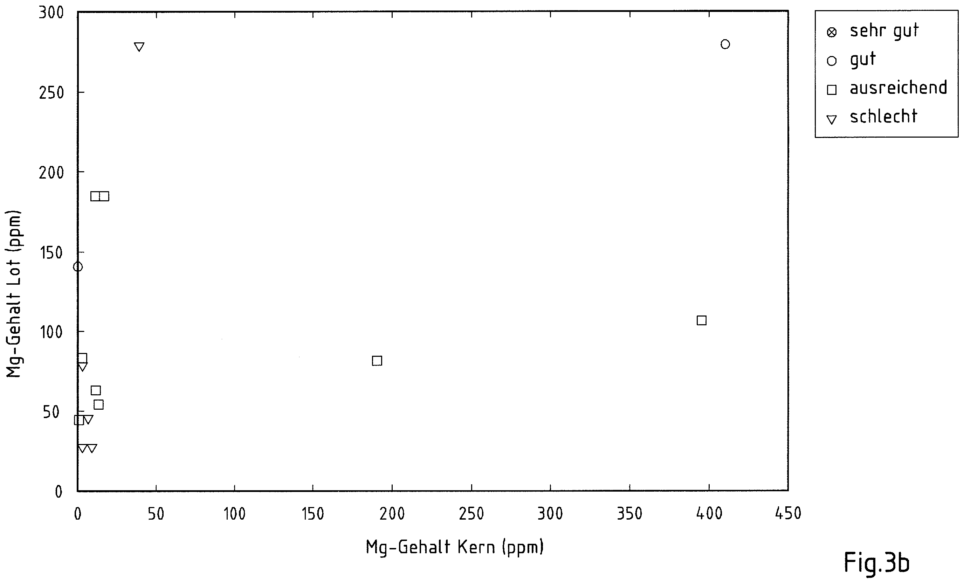

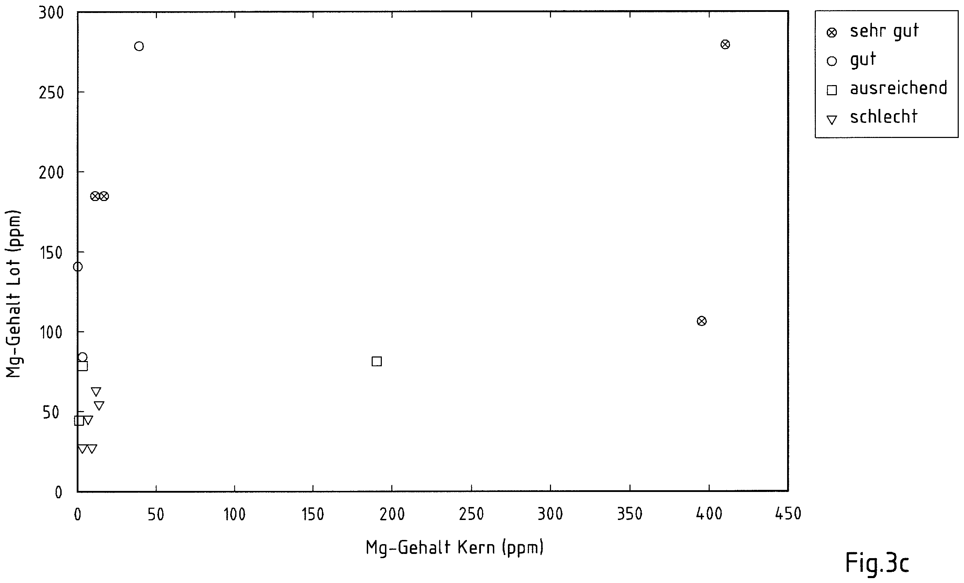

Fig. 3a-c zeigen Übersichtsdiagramme des Lötergebnisses der Ausführungsbeispiele des Aluminiumverbundwerkstoffs aus Tabelle 1 in Abhängigkeit der Mg-Gehalte von Aluminiumlotlegierung und Aluminiumkernlegierung. Dabei zeigt Fig. 3a die Aluminiumverbundwerkstoffe mit sauer gebeizter Oberfläche, Fig. 3b die Aluminiumverbundwerkstoffe mit alkalisch gebeizter und dekapierter Oberfläche und Fig. 3c die Aluminiumverbundwerkstoffe mit alkalisch gebeizter und unter Zusatz von Fluoriden dekapierter Oberfläche.

Es lässt sich eine deutliche Abhängigkeit des Lötergebnisses vom Mg-Gehalt der Aluminiumlotlegierung erkennen. Legierungen mit kleineren Mg-Gehalten unterhalb von 90 ppm ergeben überwiegend schlechte oder lediglich ausreichende Lötergebnisse. Die entsprechenden Legierungen sind in Tabelle 1 als Vergleichsbeispiele gekennzeichnet. Im Bereich zwischen 90 ppm und 300 ppm liegen überwiegend ausreichende und gute Ergebnisse vor. Die entsprechenden Legierungen sind in Tabelle 1 als Ausführungsbeispiele gekennzeichnet. Im Bereich zwischen 90 ppm und 200 ppm überwiegen gute Lötergebnisse, sogar bei sehr geringen Mg-Gehalten der Aluminiumkernlegierung, so dass das entsprechende Lötergebnis überwiegend auf die Zusammensetzung und die Oberflächenbehandlung der Lotschicht zurückzuführen ist. Der weiter bevorzugte Bereich des Mg-Gehalts der Lotschicht von 130 ppm bis 200 ppm wird anhand der überwiegend guten Ergebnisse in diesem Bereich und durch die Tatsache, dass geringe Mg-Gehalte die Lötqualität im CAB-Verfahren verbessern, deutlich.

In Tabelle 1 ist auch ein mittlerer Mg-Gehalt $c_{Mg}$ des Verbundwerkstoffs angegeben, welcher wie folgt berechnet ist:

$$c_{Mg} = (d_{Lot}\, c_{Mg,Lot} + d_{Kern}\, c_{Mg,Kern})/d_{gesamt}$$

$$= (2 \times 0{,}08\, c_{Mg,Lot} + 0{,}64\, c_{Mg,Kern})/0{,}8,$$

wobei $d_{Lot}$, $d_{Kern}$ und $d_{gesamt}$ jeweils die Dicken der Lotschicht, Kernschicht und des gesamten Verbundwerkstoffs angeben und $c_{Mg,Lot}$ und $c_{Mg,Kern}$ die Mg-Gehalte in Lot und Kern in ppm bezeichnen. Aufgrund möglicher Diffusionseffekte zwischen Kernlegierung und Lotlegierung kann auch der Mg-Gehalt der Kernlegierung ggf. zur Lötfähigkeit des Verbundwerkstoffs beitragen oder die Lötfähigkeit in Form einer Konzentrationssenke vermindern. Es zeigt sich in Tabelle 1, dass die

Vergleichsbeispiele, welche überwiegend nur schlechte und ausreichende Lötergebnisse zeigen, einen mittleren Mg-Gehalt von weniger als 20 ppm aufweisen bzw. die erfindungsgemäßen Beispiele einen mittleren Mg-Gehalt von mindestens 25 ppm aufweisen. Eine Ausnahme hiervon ist die Vergleichsprobe B, welche einen relativ hohen Mg-Gehalt in der Kernschicht aufweist. Jedoch ist hierbei der Mg-Gehalt der Lotschicht mit 79 ppm zu gering, so dass keine guten Lötergebnisse beobachtet werden konnten.

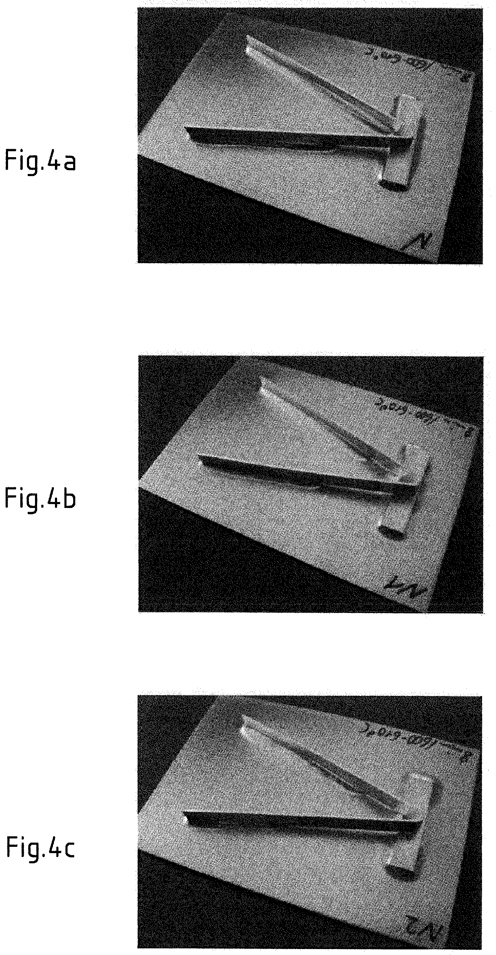

Fig. 4a-c zeigt Fotos des gelöteten Ausführungsbeispiels N des Aluminiumverbundwerkstoffs aus Tabelle 1 mit einem Mg-Gehalt von 140 ppm in der Aluminiumlotlegierung. Die guten bzw. sehr guten Lötergebnisse bei allen Oberflächenbehandlungen lassen sich erkennen. Dabei zeigt Fig. 4a die sauer gebeizte Probe, Fig. 4b die alkalisch gebeizte und dekapierte Probe und Fig. 4c die alkalisch gebeizte und unter Zusatz von Fluoriden dekapierte Probe.

*Tabelle 2*

| Probe | Mg-Gehalt Lotschicht (ppm) | Bi-Gehalt Lotschicht (ppm) | Mg-Gehalt Kernschicht (ppm) | Cu-Gehalt Kernschicht (Gew.-%) | Ti-Gehalt Kernschicht (Gew.-%) |
|---|---|---|---|---|---|
| V1 | 235 | <5 | <5 | 0,17 | 0,013 |
| V2 | 230 | 240 | <5 | 0,17 | 0,013 |
| V3 | 230 | 240 | 5 | 0,44 | 0,145 |
| V4 | 230 | 240 | 800 | 0,004 | 0,008 |
| V5 | 247 | 467 | <5 | 0,17 | 0,013 |

*Tabelle 3*

| Probe | Dicke(mm) | Ergebnisse langsames Löten | | | Ergebnisse schnelles Löten | | | | | | | | |
|---|---|---|---|---|---|---|---|---|---|---|---|---|---|
| | | unbeh. | alk. geb. | sauer geb. | unbeh. | alkalisch gebeizt | | | | sauer gebeizt | | | |
| | | | | | | 10 s | 20 s | 30 s | 60 s | 10 s | 15 s | 30 s | 60 s |
| V1 | 0,4 | ▽ | ○ | ○ | ▽ | ○ | ○ | ○ | ○ | € | ○ | ○ | ○ |
| | 1,5 | ▽ | € | ⊗ | ▽ | ○ | ⊗ | ⊗ | ⊗ | ○ | ⊗ | ⊗ | ⊗ |
| V2 | 0,4 | € | € | ▽ | ▽ | ▽ | € | € | € | ▽ | ▽ | € | € |
| | 1,5 | ▽ | ○ | € | € | ○ | ○ | ○ | ○ | ▽ | ▽ | € | ⊗ |
| V3 | 0,4 | ▽ | € | ▽ | ▽ | ▽ | € | € | € | ▽ | € | ▽ | ▽ |
| | 1,5 | ○ | ⊗ | ▽ | ○ | ○ | ⊗ | ⊗ | ⊗ | ▽ | € | ▽ | € |
| V4 | 0,4 | ○ | ⊗ | ⊗ | ○ | ○ | ⊗ | ⊗ | ⊗ | € | ○ | ⊗ | ⊗ |

(fortgesetzt)

| Probe | Dicke(mm) | Ergebnisse langsames Löten | | | Ergebnisse schnelles Löten | | | | | | | | |
|---|---|---|---|---|---|---|---|---|---|---|---|---|---|
| | | unbeh. | alk. geb. | sauer geb. | unbeh. | alkalisch gebeizt | | | | sauer gebeizt | | | |
| | | | | | | 10 s | 20 s | 30 s | 60 s | 10 s | 15 s | 30 s | 60 s |
| | 1,5 | ⊗ | ⊗ | ⊗ | ○ | ○ | ⊗ | ⊗ | ⊗ | € | € | ⊗ | ⊗ |
| V5 | 0,4 | € | ○ | € | ∇ | ∇ | ○ | ○ | ○ | ∇ | € | € | € |
| | 1,5 | ○ | ⊗ | ∇ | ∇ | € | ⊗ | ⊗ | ⊗ | ∇ | € | € | € |

Tabellen 2 und 3 zeigen eine Zusammenstellung der Lötergebnisse der zweiten Versuchsreihe, welche mit dem beschriebenen Versuchsaufbau gemessen wurde. Dabei entsprachen die Legierungszusammensetzung der Aluminiumlotlegierung dem Typ AA 4045 und die der Aluminiumkernlegierung dem Typ AA 3xxx, abgesehen von Abweichungen in den Konzentrationen für Mg, Bi, Cu und Ti, wie diese in Tabelle 2 angegeben sind. Die Kernlegierung der Versuche V1, V2 und V5 entspricht dabei den Spezifikationen des Typs AA 3003. Die Kernlegierung des Versuchs V3 entspricht einem modifizierten Typ AA 3017 mit dem in der Tabelle 2 angegebenen Cu-Gehalt und Ti-Gehalt. Bei Versuch V4 wurde eine Kernlegierung mit einem modifizierten Typ AA 3003 mit dem in Tabelle 2 angegebenen zusätzlichen Mg-Gehalt verwendet.

Dabei wurde das thermische Fügeverfahren im Batchofen unter Schutzgas mit zwei verschiedenen Lötzyklen vorgenommen: einem "langsamen Löten" über einen Lötzyklus mit einer ca. 20 Minuten andauernden Aufheizkurve und einer Haltezeit zwischen 600°C und 610° C von 8 min für eine Probendicke von 0,4 mm bzw. von 10 min für eine Probendicke von 1,5 mm. Die "langsame" Aufheizkurve wurde erreicht, indem die Probe bei einer Ofentemperatur von 400 °C in den Batchofen eingesetzt wurde und dann auf Löttemperatur aufgeheizt wurde. Im "schnellen Löten" wurde ein noch kürzerer Lötzyklus verwendet, wobei die Probe in den bereits heißen, auf Löttemperatur aufgewärmten Ofen eingesetzt wurde. Die Aufheizkurve bis zum Erreichen der Löttemperatur dauerte in diesem Fall nur 4 bis maximal 8 Minuten. Die Haltezeit bei 600°C betrug 8 min für eine Probendicke von 0,4 mm bzw. über 10 min für eine Probendicke von 1,5 mm. Die angegebenen Temperaturen wurden am Stahlprobenhalter gemessen, auf dem die Aluminiumprobe auflag.

Die Dicke der Probe ist hierbei die mittlere Dicke des gesamten Blechs bzw. Aluminiumverbundwerkstoffs; die mittlere Dicke der Lotschicht betrug 7,5 % der angegebenen mittleren Dicke des gesamten Aluminiumverbundwerkstoffs.

Die Kontaktzeit der Proben in der Beize in den Versuchen mit dem langsamen Löten betrug für die alkalische Behandlung 20 Sekunden und für die saure Behandlung 30 Sekunden. Neben den verschiedenen Legierungskombinationen wurden für das schnelle Löten die Kontaktzeit für das alkalische Beizen und das saure Beizen variiert. Die Kontaktzeit ist jeweils mit 10,15 bzw. 20, 30 und 60 Sekunden in Tabelle 3 vermerkt. Auch wurden unbehandelte Proben, welche nicht weiter oberflächenkonditioniert sind, als Vergleich untersucht.

Zunächst lässt sich anhand der Ergebnisse aus Tabelle 3 feststellen, dass die unbehandelten Proben überwiegend schlechte oder nur ausreichende Lötergebnisse liefern. Durch eine alkalische oder saure Behandlung der Oberfläche wird das Lötergebnis für die meisten Proben entscheidend verbessert. Von den unbehandelten Proben zeigt lediglich V4 sehr gute Ergebnisse. Die Aluminiumkernlegierung der Probe V4 hat hierbei einen hohen Mg-Gehalt von 800 ppm, welcher das Lötergebnis verbessert.

Zudem scheint aus einem Vergleich der Ergebnisse für die verschiedenen Probendicken hervorzugehen, dass die dickeren Proben mit 1,5 mm Dicke in der Regel besser löten als die dünneren Proben mit 0,4 mm Dicke. Dies ist jedoch auch darauf zurückzuführen, dass die dickeren Proben bei gleichem relativen Lotanteil eine größere absolute Dicke der Lotschicht aufweisen und damit eine größere absolute Menge an Aluminiumlotlegierung. Unabhängig von der Dicke der Probe lässt sich feststellen, dass die alkalische oder saure Behandlung der Oberfläche das Lötergebnis für die meisten Proben entscheidend verbessert.

Beispielsweise aus einem Vergleich der Proben V1, V2 und V5 lässt sich schließen, dass Bi in der Aluminiumlotlegierung einen positiven Einfluss auf das Lötergebnis hat. Es zeigt sich, dass in Kombination mit dem spezifischen Mg-Gehalt der Aluminiumlotlegierung und der alkalischen oder sauren Behandlung der Oberfläche bereits Bi-Gehalt von weniger als 500 ppm, vorzugsweise höchstens 280 ppm einen deutlichen positiven Effekt auf die Lötergebnisse hat. Insbesondere sind die Bereiche von 100 ppm bis 280 ppm und 200 ppm bis 280 ppm als vorteilhaft zu nennen. Entsprechende Bi-Gehalte sind bereits ausreichend, um die Löteigenschaften des Aluminiumverbundwerkstoffs weitgehend zu optimieren, ohne größere Mengen an Bi zusetzen zu müssen.

Für die Proben V2 bis V5 hat sich zudem gezeigt, dass für die Mindestgehalte an Bi eine alkalisch gebeizte Oberfläche zu deutlich verbesserten Lötergebnissen führt bzw. auch geringere Kontaktzeiten benötigt als bei einer sauren Behandlung. Der vorteilhafte Effekt von Bi in der Aluminiumlotlegierung wird somit auf besondere Weise durch eine alkalisch gebeizte Oberfläche unterstützt.

In den Versuchen beträgt die Kontaktzeit des Aluminiumverbundwerkstoffs in der Beizlösung bevorzugt 10 bis 40 Sekunden. Für ein alkalisches Beizen beträgt die Kontaktzeit weiter bevorzugt 10 bis 30 Sekunden, da sich wie aus Tabelle 2 ersichtlich mit höheren Kontaktzeiten das Lötergebnis nicht weiter wesentlich entwickelt. Für ein saures Beizen beträgt die Kontaktzeit weiter bevorzugt 20 bis 40 Sekunden, wobei für Proben mit einem Bi-Gehalt ab 100 ppm bzw. 200 ppm eine Tauchzeit für die saure Behandlung von mehr als 40 Sekunden vorteilhaft ist. Für die Produktion, insbesondere unter Verwendung von Sprühverfahren beim Beizen, sind Kontaktzeiten von insbesondere 1 bis 60 Sekunden, bevorzugt 2 bis 40 Sekunden, weiter bevorzugt 2 bis 20 Sekunden vorgesehen.

Fig. 5a-c zeigen Fotos von Schnitten durch Lötstellen unter Verwendung des Aluminiumverbundwerkstoffs und Vergleichswerkstoffen im Vakuumlötverfahren, um die Lötfähigkeit des Aluminiumverbundwerkstoffs in verschiedenen Lötverfahren zu demonstrieren. Die Zusammensetzung von Aluminiumkernlegierung und Aluminiumlotlegierung ist in Tabelle 4 in Gew.-% aufgeführt.

*Tabelle 4*

| Probe (Gew.-% | | Si | Fe | Cu | Mn | Mg | Cr | Zn | Ti | Zr | Bi |
|---|---|---|---|---|---|---|---|---|---|---|---|
| Fig. 5a | Kern | 0,100 | 0,510 | 0,012 | 1,080 | 0,0013 | 0,0008 | 0,0093 | 0,013 | 0,0019 | - |
| | Lot | 10,680 | 0,444 | 0,003 | 0,061 | 0,0030 | 0,0010 | 0,0130 | 0,016 | 0,0010 | 0,033 |
| Fig. 5b | Kern | 0,129 | 0,473 | 0,1480 | 1,109 | 0,042 | 0,008 | 0,0054 | 0,018 | 0 | 0 |
| | Lot | 10,02 | 0,193 | 0,0009 | 0,003 | 0,009 | 0,001 | 0,0052 | 0,011 | 0 | 0 |
| Fig.5c | Kern | 0,430 | 0,250 | 0,04 | 0,06 | 0,6 | 0 | 0,05 | 0,040 | 0 | 0 |
| | Lot | 9,920 | 0,240 | 0,00 | 0,01 | 0,02 | 0 | 0,00 | 0,010 | 0 | 0 |

Bei den der Fig. 5a-c zugrunde liegenden Proben handelt es sich um walzplattierte Aluminiumverbundwerkstoffe mit einer alkalisch gebeizten Oberfläche. Die Probe aus Fig. 5a ist hierbei eine Aluminiumkernlegierung des Typs AA 3003, welche mit einer Aluminiumlotlegierung des Typs AA 4045 plattiert wurde, wobei der Mg-Gehalt der Aluminiumlotlegierung mit 30 ppm niedrig gewählt wurde. Die Probe war im walzharten Zustand. Fig. 5b zeigt ebenfalls eine Aluminiumkernlegierung des Typs AA 3003 mit einer Aluminiumlotlegierung des Typs AA 4045, wobei ein höherer Mg-Gehalt von 90 ppm gewählt wurde. Fig. 5c zeigt eine Aluminiumkernlegierung des Typs AA 6063 mit einer Aluminiumlotlegierung des Typs AA 4045, wobei letztere einen Mg-Gehalt von 200 ppm aufwies. Die Proben aus Fig. 5b und c waren hierbei im weichgeglühten Zustand.

Die Fig. 5a-c verdeutlichen nun die Lötergebnisse im Vakuumlöten für die verschiedenen Legierungen anhand von metallographischen Schliffen. In den Fig. 5a-c zeigt sich für die verschiedenen Mg-Gehalte von 30, 90 und 200 ppm in der Lotschicht ein gutes Lötergebnis. Die Gefüge der Werkstoffe sind deutlich einen Materialschluss miteinander eingegangen. Damit ist ersichtlich, dass mit den entsprechend oberflächenbehandelten Aluminiumverbundwerkstoffen schon mit sehr geringen Mg-Gehalten zufriedenstellende Lötergebnisse im Vakuumlöten erreicht werden können. Mit entsprechend geringen Mg-Gehalten können die negativen Auswirkungen auf die verwendeten Vakuumöfen weitgehend vermieden werden.

Entgegen der Erwartung der Fachwelt ist es überraschenderweise möglich, durch eine Kombination der alkalischen oder sauren Beize mit der spezifischen Zusammensetzung des Aluminiumverbundwerkstoffs, Aluminiumverbundwerkstoffe thermisch im Vakuum zu fügen ohne dass Lote mit mehr als 1% Mg Verwendung finden müssen.

Fig. 5c zeigt hierbei ein gutes Lötergebnis unter Verwendung einer Lotschicht mit einem Mg-Gehalt von 200 ppm. Hierbei ist auch der Mg-Gehalt der Kernschicht mit 6000 ppm höher gewählt, was zu dem guten Lötergebnis beitragen kann.

Während die Lotschichten mit geringeren Mg-Gehalten mit der zuvor beschriebenen Oberflächenbehandlung im Vakuumlötverfahren prozesssicher gelötet werden können, siehe beispielsweise Fig. 5a mit einem Mg-Gehalt von 30 ppm in der Lotschicht, zeigen die Aluminiumverbundwerkstoffe mit dem erfindungsgemäß herausgestellten Bereich des Mg-Gehalts von 90 ppm bis 300 ppm, vorzugsweise 90 ppm bis 200 ppm, auch prozesssicheres Verhalten in Lötverfahren unter Schutzgas, beispielsweise in einem CAB-Verfahren. Dies wird anhand der obigen Beschreibung der Tabellen 2 und 3 deutlich.

Damit ist gezeigt, dass mit dem beschriebenen Aluminiumverbundwerkstoff gute Lötqualität sowohl im CAB-Verfahren als auch beim Vakuumlöten erreicht werden kann, wobei die negativen Auswirkungen des Mg-Gehalts, insbesondere beim Vakuumlöten, weitgehend vermieden werden können. Im Ergebnis wird ein Aluminiumverbundwerkstoff bereitgestellt, welcher flexibel im Hinblick auf die Auswahl des Verfahrens zum thermischen Fügen ist und gleichzeitig gute Lötbarkeit bei hoher Wirtschaftlichkeit zeigt.

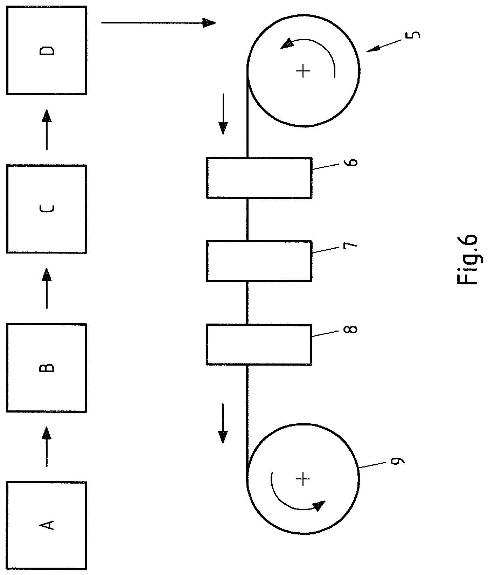

In Fig. 6 ist ein Ausführungsbeispiel für ein Verfahren zur Herstellung eines bandförmigen Aluminiumverbundwerkstoffs dargestellt. Im Herstellschritt A wird der Aluminiumverbundwerkstoff durch simultanes Gießen von verschiedenen Schmelzen oder durch Walzplattieren hergestellt. Anschließend kann beispielsweise ein Kaltwalzen B auf Enddicke erfolgen, wobei während des Kaltwalzens mindestens eine Zwischenglühung erfolgen kann. Anschließend wird der Aluminiumverbundwerkstoff im Verfahrensschritt C beispielsweise weichgeglüht. Im Verfahrensschritt D wird zumindest die Aluminiumlotlegierungsschicht einer Oberflächenbehandlung unterzogen. Der Verfahrensschritt D ist für einen bandförmigen Aluminiumverbundwerkstoff anschließend dargestellt.

Der auf einem Coil 5 befindliche Aluminiumverbundwerkstoff wird optional einem Entfettungsschritt 6 unterzogen. Anschließend durchläuft der Aluminiumverbundwerkstoff den Beizschritt 7 in dem dieser beispielsweise durch ein Bad mit einer wässrigen, sauren Beizlösung geführt wird, welche neben einer Säure einen Komplexbildner aufweist, so dass ein Materialabtrag auf der Aluminiumlotlegierungsoberfläche erfolgt. Vorzugsweise besteht das Bad aus einer wässrigen Schwefelsäure mit 0,1 % bis 20 %, optional mindestens einem Tensid und einem HF Gehalt von 20 ppm bis 600 ppm, bevorzugt 300 ppm bis 600 ppm oder 300 ppm bis 480 ppm.

Nach einem Spülungs- und Trocknungsschritt 8 wird der oberflächenbehandelte Aluminiumverbundwerkstoff zu einem Coil 9 aufgehaspelt. Der beschriebene Oberflächenbehandlungsschritt D kann aber auch nicht bandförmig erfolgen oder unmittelbar am Auslauf des Herstellverfahrens, also des Kaltwalzens oder beispielsweise der Weichglühung, sofern ein Durchlaufofen für diese verwendet wird.

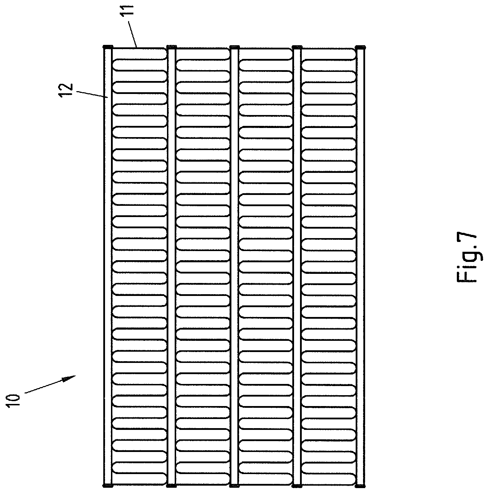

In Fig. 7 ist in einer Draufsicht ein Ausführungsbeispiel einer thermisch gefügten Konstruktion in Form eines Wärmetauschers 10 dargestellt.

Die Lamellen 11 des Wärmetauschers 10 bestehen üblicherweise aus blankem oder beidseitig mit einem Aluminiumlot beschichtetem Aluminiumlegierungsband. Die Lamellen 11 werden mäanderförmig gebogen an Rohre 12 gelötet, so dass eine Vielzahl an Lötverbindungen benötigt wird. Es ist daher besonders vorteilhaft den erfindungsgemäßen Aluminiumverbundwerkstoff zu verwenden, da die besonders gute Lötergebnisse beim CAB-Lötverfahren auch ohne Flussmittel erzielt. Die fehlenden Flussmittelrückstände wirken sich im Vergleich zu mit Flussmitteln gelöteten Wärmetauschern positiv auf den Betrieb der Wärmetauscher aus.

Die Versuchsergebnisse zeigten insbesondere, dass ein Aluminiumverbundwerkstoff, welcher eine gebeizte Oberfläche einer Aluminiumlotlegierungsschicht im Zusammenhang mit einem spezifischen Mg-Gehalt aufweist, sehr gute Eigenschaften in Bezug auf dessen Lötfähigkeit in einem flussmittelfreien unter Schutzgas durchgeführten thermischen Fügeverfahren, beispielsweise einem CAB-Lötverfahren als auch im thermischen Fügen im Vakuum aufweist. Mit dem beschriebenen Aluminiumverbundwerkstoff ist es somit möglich, die Löteigenschaften ohne die Verwendung von Flussmitteln unter Vermeidung der aus dem Stand der Technik bekannten Nachteile weiter zu optimieren und auch verschiedene Lötverfahren mit dem gleichen Typ von Aluminiumverbundwerkstoff prozesssicher durchzuführen.

Sämtliche Konzentrationsangaben in der Beschreibung, soweit nicht explizit anders angegeben, beziehen sich auf das Gewicht.

**Patentansprüche**

**1.** Aluminiumverbundwerkstoff zur Verwendung in thermischen flussmittelfreien Fügeverfahren, umfassend

- mindestens eine Kernschicht bestehend aus einer Aluminiumkernlegierung und
- mindestens einer einseitig oder beidseitig auf der Kernschicht vorgesehenen, äußeren Lotschicht bestehend aus einer Aluminiumlotlegierung,

**dadurch gekennzeichnet, dass**

- die Aluminiumlotlegierung folgende Zusammensetzung in Gew.-% aufweist:

| | | | |
|---|---|---|---|
| 6,5 % | ≤ | Si ≤ | 13 %, |
| Fe | ≤ | 1 %, | |
| 90 ppm | ≤ | Mg ≤ | 300 ppm, |
| Bi | ≤ | 500 ppm, | |
| Mn | ≤ | 0,15 %, | |
| Cu | ≤ | 0,3 %, | |
| Zn | ≤ | 3 %, | |
| Ti | ≤ | 0,30 %, | |

Rest Al und unvermeidbare Verunreinigungen einzeln maximal 0,05 %, in Summe maximal 0,15 % und
- die Aluminiumlotschicht eine alkalisch gebeizte oder sauer gebeizte Oberfläche aufweist.

2. Aluminiumverbundwerkstoff nach Anspruch 1,
**dadurch gekennzeichnet, dass**
die Aluminiumlotlegierung einen Mg-Gehalt in Gew.-% von

$$90 \text{ ppm} \quad \leq \quad \text{Mg} \quad \leq \quad 200 \text{ ppm}$$

aufweist.

3. Aluminiumverbundwerkstoff nach Anspruch 1 oder 2, **dadurch gekennzeichnet, dass** die Aluminiumlotlegierung einen Bi-Gehalt in Gew.-% von

$$\text{Bi} \quad \leq \quad 280 \text{ ppm},$$

aufweist.

4. Aluminiumverbundwerkstoff nach einem der Ansprüche 1 bis 3,
**dadurch gekennzeichnet, dass**
die Aluminiumlotlegierung die Spezifikationen des Typs AA 4045 oder des Typs AA 4343 erfüllt.

5. Aluminiumverbundwerkstoff nach einem der Ansprüche 1 bis 4,
**dadurch gekennzeichnet, dass**
die Aluminiumkernlegierung einen Mg-Gehalt von höchstens 1,0 Gew.-%, vorzugsweise 0,2 % bis 0,6 %, 0,05 % bis 0,30% oder weniger als 0,05 Gew.-% aufweist.

6. Aluminiumverbundwerkstoff nach einem der Ansprüche 1 bis 5,
**dadurch gekennzeichnet, dass**
die Aluminiumkernlegierung eine Legierung vom Typ AA3xxx, vorzugsweise der Typen AA3003, AA3005, AA3017 oder vom Typ AA6xxx, vorzugsweise AA6063 oder AA6060 ist.

7. Aluminiumverbundwerkstoff nach einem der Ansprüche 1 bis 6,
**dadurch gekennzeichnet, dass**
die mittlere Dicke des Aluminiumverbundwerkstoffs von 0,05 bis 6 mm, bevorzugt von 0,2 bis 3 mm beträgt.

8. Verfahren zur Herstellung eines Aluminiumverbundwerkstoffs, insbesondere eines Aluminiumverbundwerkstoffs nach einem der Ansprüche 1 bis 7, bei dem

- mindestens eine Kernschicht bestehend aus einer Aluminiumkernlegierung bereitgestellt wird und
- mindestens eine äußere Lotschicht bestehend aus einer Aluminiumlotlegierung einseitig oder beidseitig auf die Kernschicht aufgebracht wird,

**dadurch gekennzeichnet, dass**

- die Aluminiumlotlegierung folgende Zusammensetzung in Gew.-% aufweist:

| | | | |
|---|---|---|---|
| 6,5 % | $\leq$ | Si $\leq$ | 13 %, |
| Fe | $\leq$ | 1 %, | |
| 90 ppm | $\leq$ | Mg $\leq$ | 300 ppm, |
| Bi | $<$ | 500 ppm, | |
| Mn | $\leq$ | 0,15 %, | |
| Cu | $\leq$ | 0,3 %, | |
| Zn | $\leq$ | 3 %, | |
| Ti | $\leq$ | 0,30 %, | |

Rest Al und unvermeidbare Verunreinigungen einzeln maximal 0,05 %, in Summe maximal 0,15 % und
- der Aluminiumverbundwerkstoff mit einer wässrigen, alkalischen oder sauren Beizlösung gebeizt wird.

9. Verfahren nach Anspruch 8,
**dadurch gekennzeichnet, dass**
eine saure, wässrige Beizlösung enthaltend:

- mindestens eine Mineralsäure und mindestens einen Komplexbildner oder mindestens eine Säure der Gruppe kurzkettiger Carbonsäuren und mindestens einen Komplexbildner; oder
- mindestens eine komplexierende Säure;

verwendet wird.

10. Verfahren nach Anspruch 9,
**dadurch gekennzeichnet, dass**
die Konzentrationen der Mineralsäuren in der Beizlösung folgende Grenzen aufweisen:

$H_2SO_4$ : 0,1 % bis 20 Gew.-%,
$H_3PO_4$ : 0,1 % bis 20 Gew.-%
HCl : 0,1 % bis 10 Gew.-%
HF : 20 ppm bis 3,0 Gew.-%,
und optional mindestens ein Tensid in der Beizlösung enthalten ist.

11. Verfahren nach Anspruch 8,
**dadurch gekennzeichnet, dass**
eine alkalische Beizlösung enthaltend 0,01- 5 Gew.-% NaOH verwendet wird, welche optional mindestens 0,5 - 3 Gew.-% eines wässrigen Gemisches aus 5 - 40 Gew.-% Natriumtripolyphosphat, 3 -10 Gew.-% Natriumgluconat, 3 - 8 Gew.-% nichtionischer und anionischer Tenside optional 0,5 - 70 Gew.-% Natriumcarbonat aufweist.

12. Verfahren zum thermischen Fügen von Bauteilen,
bei dem mindestens ein Bauteil aufweisend einen Aluminiumverbundwerkstoff nach einem der Ansprüche 1 bis 7 mit mindestens einem weiteren Bauteil flussmittelfrei thermisch gefügt wird.

13. Verfahren nach Anspruch 12,
**dadurch gekennzeichnet, dass**
das flussmittelfreie thermische Fügen im Vakuum, insbesondere mit einem maximalen Druck von $10^{-5}$ mbar, durchgeführt wird.

14. Verfahren nach Anspruch 12,
**dadurch gekennzeichnet, dass**
das flussmittelfreie thermische Fügen in einer Schutzgasatmosphäre durchgeführt wird.

15. Thermisch gefügte Konstruktion aufweisend

- mindestens ein Bauteil aufweisend einen Aluminiumverbundwerkstoff nach einem der Ansprüche 1 bis 7 und
- mindestens ein weiteres Bauteil, welches insbesondere Aluminium oder eine Aluminiumlegierung aufweist.


**Claims**

1. Aluminium composite material for use in thermal flux-free joining methods, comprising

- at least one core layer consisting of an aluminium core alloy and
- at least one outer solder layer provided on one or both sides of the core layer consisting of an aluminium solder alloy, **characterised in that**
- the aluminium solder alloy has the following composition in wt%:

| 6.5% | ≤ | Si | ≤ | 13%, |
| | Fe | ≤ | 1%, | |
| 90 ppm | ≤ | Mg | ≤ | 300 ppm, |
| | Bi | < | 500 ppm, | |
| | Mn | ≤ | 0.15%, | |
| | Cu | ≤ | 0.3%, | |
| | Zn | ≤ | 3%, | |
| | Ti | ≤ | 0.30%, | |

Remainder Al and unavoidable impurities individually at most 0.05%, in total at most 0.15% and
- the aluminium solder layer has an alkaline pickled or acid pickled surface.

2. Aluminium composite material according to Claim 1, **characterised in that** the aluminium solder alloy has an Mg content in wt% of

$$90 \, \text{ppm} \quad \leq \quad \text{Mg} \quad \leq \quad 200 \, \text{ppm}.$$

3. Aluminium composite material according to Claim 1 or 2, **characterised in that** the aluminium solder alloy has a Bi content in wt% of

$$\text{Bi} \quad \leq \quad 280 \, \text{ppm}.$$

4. Aluminium composite material according to any one of Claims 1 to 3, **characterised in that** the aluminium solder alloy meets the specifications of type AA 4045 or type AA 4343.

5. Aluminium composite material according to any one of Claims 1 to 4, **characterised in that** the aluminium core alloy has an Mg content of at most 1.0 wt%, preferably 0.2% to 0.6%, 0.05% to 0.30% or less than 0.05 wt%.

6. Aluminium composite material according to any one of Claims 1 to 5, **characterised in that** the aluminium core alloy is an alloy of the type AA3xxx, preferably of the types AA3003, AA3005, AA3017 or of the type AA6xxx, preferably AA6063 or AA6060.

7. Aluminium composite material according to any one of Claims 1 to 6, **characterised in that** the average thickness of the aluminium composite material is from 0.05 to 6 mm, preferably from 0.2 to 3 mm.

8. Method for producing an aluminium composite material, in particular an aluminium composite material according to any one of Claims 1 to 7, in which

   - at least one core layer consisting of an aluminium core alloy is provided and
   - at least one outer solder layer consisting of an aluminium solder alloy is applied on one or both sides of the core layer, **characterised in that**
   - the aluminium solder alloy has the following composition in wt%:

| 6.5% | ≤ | Si | ≤ | 13%, |
| | Fe | ≤ | 1%, | |
| 90 ppm | ≤ | Mg | ≤ | 300 ppm, |
| | Bi | ≤ | 500 ppm, | |
| | Mn | ≤ | 0.15%, | |
| | Cu | ≤ | 0.3%, | |
| | Zn | ≤ | 3%, | |
| | Ti | ≤ | 0.30%, | |

Remainder Al and unavoidable impurities individually at most 0.05%, in total at most 0.15% and
- the aluminium composite material is pickled with an aqueous, alkaline or acid pickling solution.

9. Method according to Claim 8, **characterised in that** an acid, aqueous pickling solution is used containing:

- at least one mineral acid and at least one complexing agent or at least one acid of the group of short-chain carboxylic acids and at least one complexing agent; or
- at least one complexing acid.

10. Method according to Claim 9, **characterised in that** the concentrations of the mineral acids in the pickling solution have the following limits:

$H_2SO_4$: 0.1% to 20 wt%,
$H_3PO_4$: 0.1% to 20 wt%,
HCl: 0.1% to 10 wt%,
HF: 20 ppm to 3.0 wt%,
and optionally at least one surfactant is contained in the pickling solution.

11. Method according to Claim 8, **characterised in that** an alkaline pickling solution containing 0.01 - 5 wt% NaOH is used, which optionally has at least 0.5 - 3 wt% of an aqueous mixture of 5 - 40 wt% sodium tripolyphosphate, 3-10 wt% sodium gluconate, 3-8 wt% non-ionic and anionic surfactants, optionally 0.5 - 70 wt% sodium carbonate.

12. Method for thermally joining components, in which at least one component comprising an aluminium composite material according to any one of Claims 1 to 7 is thermally joined to at least one additional component in a flux-free manner.

13. Method according to Claim 12, **characterised in that** the flux-free thermal joining is carried out in a vacuum, in particular with a maximum pressure of $10^{-5}$ mbar.

14. Method according to Claim 12, **characterised in that** the flux-free thermal joining is carried out in a protective gas atmosphere.

15. Thermally joined construction comprising

- at least one component comprising an aluminium composite material according to any one of Claims 1 to 7 and
- at least one additional component which in particular comprises aluminium or an aluminium alloy.


**Revendications**

1. Matériau composite à base d'aluminium destiné à être utilisé dans des procédés d'assemblage thermiques sans flux, comprenant

- au moins une couche centrale constituée d'un alliage central d'aluminium et
- au moins une couche de brasure externe, disposée d'un côté ou des deux côtés de la couche centrale, constituée d'un alliage de brasure d'aluminium,

**caractérisé en ce que**

- l'alliage de brasure d'aluminium possède la composition suivante, en % en poids:

$$6,5\ \% \leq Si \leq 13\ \%,$$

$$Fe \leq 1\ \%,$$

$$90 \text{ ppm} \leq \text{Mg} \leq 300 \text{ ppm,}$$

$$\text{Bi} < 500 \text{ ppm,}$$

$$\text{Mn} \leq 0,15 \text{ \%,}$$

$$\text{Cu} \leq 0,3 \text{ \%,}$$

$$\text{Zn} \leq 3 \text{ \%,}$$

$$\text{Ti} \leq 0,30 \text{ \%,}$$

le reste étant de l'Al et des impuretés inévitables, individuellement au maximum 0,05 % et en totalité au maximum 0,15 % et
- la couche de brasure d'aluminium possède une surface décapée par traitement alcalin ou décapée par traitement acide.

2. Matériau composite à base d'aluminium selon la revendication 1, **caractérisé en ce que** l'alliage de brasure d'aluminium possède une teneur en Mg en % en poids de 90 ppm $\leq$ Mg $\leq$ 200 ppm.

3. Matériau composite à base d'aluminium selon la revendication 1 ou 2, **caractérisé en ce que** l'alliage de brasure d'aluminium possède une teneur en Bi en % en poids de Bi $\leq$ 280 ppm.

4. Matériau composite à base d'aluminium selon l'une des revendications 1 à 3, **caractérisé en ce que** l'alliage de brasure d'aluminium satisfait aux spécifications du type AA 4045 ou du type AA 4343.

5. Matériau composite à base d'aluminium selon l'une des revendications 1 à 4, **caractérisé en ce que** l'alliage central d'aluminium possède une teneur en Mg maximale de 1,0% en poids, de préférence de 0,2 % à 0,6 %, de 0,05 % à 0,30 % ou inférieure à 0,05 % en poids.

6. Matériau composite à base d'aluminium selon l'une des revendications 1 à 5, **caractérisé en ce que** l'alliage central d'aluminium est un alliage du type AA3xxx, de préférence des types AA3003, AA3005, AA3017, ou du type AA6xxx, de préférence AA6063 ou AA6060.

7. Matériau composite à base d'aluminium selon l'une des revendications 1 à 6, **caractérisé en ce que** l'épaisseur moyenne du matériau composite à base d'aluminium est de 0,05 à 6 mm, de préférence de 0,2 à 3 mm.

8. Procédé de fabrication d'un matériau composite à base d'aluminium, notamment d'un matériau composite à base d'aluminium selon l'une des revendications 1 à 7, selon lequel

- au moins une couche centrale constituée d'un alliage central d'aluminium est fournie et
- au moins une couche de brasure externe constituée d'un alliage de brasure d'aluminium est disposée d'un côté ou des deux côtés de la couche centrale,

**caractérisé en ce que**

- l'alliage de brasure d'aluminium possède la composition suivante, en % en poids:

$$6,5 \text{ \%} \leq \text{Si} \leq 13 \text{ \%,}$$

$$Fe \leq 1\ \%,$$

$$90\ ppm \leq Mg \leq 300\ ppm,$$

$$Bi < 500\ ppm,$$

$$Mn \leq 0{,}15\ \%,$$

$$Cu \leq 0{,}3\ \%$$

$$Zn \leq 3\ \%,$$

$$Ti \leq 0{,}30\ \%,$$

le reste étant de l'Al et des impuretés inévitables, individuellement au maximum 0,05 % et en totalité au maximum 0,15 % et
- le matériau composite à base d'aluminium est décapé avec une solution de décapage aqueuse, alcaline ou acide.

9. Procédé selon la revendication 8,
   **caractérisé en ce qu'**
   une solution de décapage acide aqueuse contenant:

   - au moins un acide minéral et au moins un agent complexant ou au moins un acide du groupe des acides carboxyliques à chaîne courte et au moins un agent complexant; ou
   - au moins un acide complexant;

   est utilisée.

10. Procédé selon la revendication 9,
    **caractérisé en ce que**
    les concentrations des acides minéraux dans la solution de décapage possèdent les limites suivantes:

    $H_2SO_4$: 0,1 % à 20 % en poids,
    $H_3PO_4$: 0,1 % à 20 % en poids,
    HCl: 0,1 % à 10 % en poids,
    HF: 20 ppm à 3,0 % en poids,
    et, en option, au moins un agent tensioactif est contenu dans la solution de décapage.

11. Procédé selon la revendication 8,
    **caractérisé en ce qu'**
    une solution de décapage alcaline contenant 0,01 - 5 % en poids de NaOH est utilisée, laquelle possède, en option, au moins 0,5 - 3 % en poids d'un mélange aqueux constitué de 5 - 40 % en poids de tripolyphosphate de sodium, de 3 - 10 % en poids de gluconate de sodium, 3 - 8 % en poids d'agents tensioactifs non ioniques et anioniques, en option, 0,5 - 70 % en poids de carbonate de sodium.

12. Procédé d'assemblage thermique d'éléments structuraux,
    selon lequel au moins un élément structural possédant un matériau composite à base d'aluminium selon l'une des revendications 1 à 7 est assemblé thermiquement sans flux avec au moins un élément structural supplémentaire.

**13.** Procédé selon la revendication 12,
**caractérisé en ce que**
l'assemblage thermique sans flux est effectué sous vide, notamment avec une pression maximale de $10^{-5}$ mbar.

**14.** Procédé selon la revendication 12,
**caractérisé en ce que**
l'assemblage thermique sans flux est effectué sous atmosphère de gaz protecteur.

**15.** Construction assemblée thermiquement, comprenant

- au moins un élément structural possédant un matériau composite à base d'aluminium selon l'une des revendications 1 à 7 et
- au moins un élément structural supplémentaire qui possède notamment de l'aluminium ou un alliage d'aluminium.

Fig.1

Fig.2

Fig.3a

EP 3 359 326 B1

Fig.3b

Fig.3c

EP 3 359 326 B1

Fig.4a

Fig.4b

Fig.4c

Fig.5a

Fig.5b

Fig.5c

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 041000696 B
- JP 4100674 A
- JP 5154693 A
- WO 2010000666 A1
- US 5102033 A
- WO 2013164466 A1
- EP 2883650 A1

**In der Beschreibung aufgeführte Nicht-Patentliteratur**

- **H. SCHOER.** Lehrbuch Schweißen und Hartlöten von Aluminiumwerkstoffen. DVS Media Verlag, 2003